(19) Europäisches Patentamt
European Patent Office
Office européen des brevets

(11) Publication number: 0 439 804 B1

(12) EUROPEAN PATENT SPECIFICATION

(45) Date of publication of patent specification: 20.09.95

(51) Int. Cl.⁶: G01D 5/38, G01P 3/48

(21) Application number: 90125118.1

(22) Date of filing: 21.12.90

(54) Rotation detecting apparatus.

(30) Priority: 26.12.89 JP 339221/89
21.09.90 JP 252280/90
21.09.90 JP 252281/90
26.09.90 JP 256303/90
19.10.90 JP 280695/90

(43) Date of publication of application:
07.08.91 Bulletin 91/32

(45) Publication of the grant of the patent:
20.09.95 Bulletin 95/38

(84) Designated Contracting States:
DE FR GB IT NL

(56) References cited:
EP-A- 0 262 349
EP-A- 0 297 482
GB-A- 1 247 975
US-A- 3 756 723

(73) Proprietor: CANON KABUSHIKI KAISHA
30-2, 3-chome, Shimomaruko,
Ohta-ku
Tokyo (JP)

(72) Inventor: Igaki, Masahiko, c/o Canon
Kabushiki Kaisha
30-2, 3-chome,
Shimomaruko
Ohta-ku,
Tokyo (JP)
Inventor: Nishimoto, Yoshifumi, c/o Canon
Kabushiki Kaisha
30-2, 3-chome,
Shimomaruko
Ohta-ku,
Tokyo (JP)

(74) Representative: Tiedtke, Harro, Dipl.-Ing. et al
Patentanwaltsbüro
Tiedtke-Bühling-Kinne & Partner
Bavariaring 4
D-80336 München (DE)

EP 0 439 804 B1

**Description**

The invention relates to a rotation detecting apparatus for detecting relative rotation of two bodies, comprising the features of the pre-characterizing clause of claim 1. Further the invention relates to a scale irradiated with beams by a light irradiation means of a rotation detecting apparatus comprising the features of the pre-characterizing clause of claim 23. Finally, the invention relates to a driving system for causing two bodies to make relative rotation, comprising the rotation detecting apparatus according to the invention.

The rotation detecting apparatus according to the invention may be used as a rotary encoder for electrically detecting a signal corresponding to a rotation quantity of a cylindrical or hollow rotary body. Generally, a rotary encoder is a simply constructed excellent measuring device capable of measuring the rotation quantity of the cylindrical rotary body with a relatively high resolving power.

A rotation detecting apparatus comprising the features of the pre-characterizing clause of claim 1 and a scale comprising the features of the pre-characterising clause of claim 23 are known from document EP-A-0 262 349. In the known rotation detecting apparatus, the diffracted image of the first region of the scale member projected on the second region thereof is generated by interference of two beams consisting of the +1st diffraction beam and the -1st diffraction beam. The intensity of the +1st order diffraction beam and the -1st order diffraction beam is usually less than the intensity of the 0th order diffraction beam, so that the apparatus known from document EP-A-0 262 349 can only obtain detecting signals of comparatively small intensity.

The present invention aims at improving the known rotation detecting apparatus with regard to the intensity of the detection signal. Further, it is an object of the invention to provide a scale enabling a more effective detection of the detecting signal. Finally, a driving system shall be provided which is improved by the improved rotation detecting apparatus.

These objects are achieved by the rotation detecting apparatus according to claim 1, by the scale according to claim 23 and by the driving system according to claim 28.

Embodiments of the invention will be described with reference to the appended drawings.

FIG. 1 is a perspective view illustrating a first embodiment of the present invention;
FIGS. 2 and 3 are plan views of assistance in explaining a measuring principle of an encoder of FIG. 1;
FIGS. 4A and 4B are perspective and sectional views showing a situation where the encoder depicted in FIG. 1 is unitized;
FIGS. 5A through 5C are block diagrams showing a second embodiment of the invention;
FIG. 6 is a view illustrating an optical scale in this embodiment;
FIG. 7 is a view fully illustrating a grating unit of the scale;
FIGS. 8 through 12 are diagrams showing some variations of a method of mounting a rotary grating unit;
FIGS. 13 and 14 are views of assistance in explaining the principle of this embodiment;
FIGS. 15A and 15B are diagrams showing waveforms of output signals of the encoder in this embodiment;
FIGS. 16A and 16B are diagrams of assistance in explaining signal processing;
FIG. 17 is a diagram showing one example of circuitry;
FIGS. 18A through 23 are explanatory diagrams showing variant forms of signal processing;
FIGS. 24A and 24B are diagrams showing a variant form of a grating configuration;
FIGS. 25A through 25C are block diagrams depicting a motor encoder;
FIG. 26 is a system block diagram illustrating an encoder-based driving system;
FIG. 27 is a perspective view depicting a rotary encoder in a fourth embodiment of the invention;
FIG. 28 is a sectional view showing the same encoder;
FIG. 29 is a top view showing the same encoder;
FIG. 30 is an explanatory diagram showing an example of using the same encoder;
FIGS. 31A to 31D are sectional views each showing a configuration of a connecting unit to the driving means of the rotary encoder in this embodiment;
FIG. 32 is a top view depicting the rotary encoder in an eighth embodiment of the invention;
FIG. 33 is a top view illustrating a rotary encoder in a ninth embodiment of the invention;
FIG. 34 is an explanatory view showing a grating unit of the same encoder;
FIGS. 35 and 36 are diagrams of assistance in explaining beam action of the same grating unit;
FIG. 37 is a top view depicting a rotary encoder in tenth embodiment of the invention;
FIGS. 38A through 38C are sectional views taken substantially along the lines A-A, B-B and C-C of FIG. 37;
FIGS. 39A through 39C are diagrams illustrating waveforms of signals in the same encoder;

2

FIGS. 40A and 40B are waveform diagrams of assistance in explaining the principle of phase correction in the same encoder;

FIG. 41 is a block diagram depicting circuitry in the same encoder;

FIG. 42 is a top view showing a rotary encoder in an eleventh embodiment of the invention;

FIG. 43 is an explanatory view showing a grating unit of the same encoder;

FIGS. 44A through 44C are diagrams illustrating waveforms of signals in the same encoder;

FIG. 45 is a block diagram showing circuitry in the same encoder;

FIGS. 46A through 46C are block diagrams showing a twelfth embodiment of the invention;

FIGS. 47 and 48 are diagrams of assistance in explaining effects of this embodiment;

FIG. 49 is a view depicting a optical scale in this embodiment;

FIG. 50 is a diagram illustrating in detail a grating unit of the scale;

FIGS. 51 to 54 are diagrams showing some variations of a method of mounting the scale;

FIGS. 55 and 56 are diagram of assistance in explaining the principle of this embodiment;

FIGS. 57A, 57B, 58A and 58B are diagrams illustrating waveforms of signals of the encoder in this embodiment.

FIG. 59 is a system block diagram showing an encoder-based driving system;

FIGS. 60A through 60C are top views showing a thirteenth embodiment of the invention;

FIG. 61 is a sectional view showing the same embodiment;

FIG. 62 is a view fully illustrating an optical system for detecting a reference position signal;

FIGS. 63 and 64 are views of assistance in explaining the action of detecting the reference position signal;

FIGS. 65A and 65B are diagrams depicting waveforms of output signals of the encoder of this embodiment;

FIGS. 66A and 66B are diagrams depicting output waveforms of the reference position signals;

FIG. 67 is a view illustrating an optical scale in this embodiment;

FIG. 68 is a view showing a variant form of a grating configuration; and

FIG. 69 is a system block diagram illustrating an encoder-based driving system.

## DESCRIPTION OF THE PREFERRED EMBODIMENTS

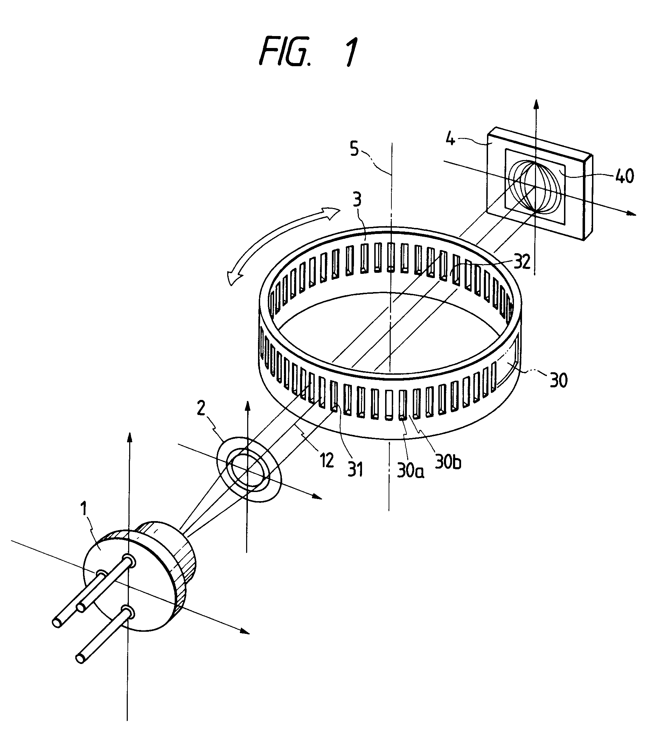

FIG. 1 is a perspective view showing one embodiment of the present invention. Designated at 1 is a semiconductor laser for emitting a coherent light beam having a wavelength λ. A collimator lens system 2 serves to collimate divergent beams emerging from the semiconductor laser 1 into substantially parallel beams. The semiconductor laser 1 and the collimator are combined to constitute a light irradiation means. A cylindrical rotary body 3 rotates in arrowed directions about a rotary axis 5 parallel to the generatrix of the cylinder. The rotary body 3 is connected via an unillustrated connector to a driving shaft of a motor or the like. The rotary body 3 is utilized as an optical scale for detecting a rotation quantity of the driving shaft. The axis 5 coincides with the central axis of the driving shaft. The axis 5 substantially coincides with the central axis of the rotary body. The rotary body 3 is made of an opaque member like a metal. A multiplicity of slits 30a are disposed at equal spacings at pitches P on a side surface 30 in the rotational directions of the rotary body 3. Beams incident on the side surface 30 pass through the slits 30a and are blocked by portions 30b between the slits 30a. More specifically, the transmitting portions marked with the symbols 30a and the shading portions marked with the symbols 30b are alternately regularly arranged in the rotational directions, thus forming gratings. The optical scale is constructed in this manner. A photoelectric converting element 4 is composed of a photodetector. The photoelectric converting element 4 outputs an electric signal corresponding to an intensity of beam incident on its light receiving surface 40.

An optical axis 12 of the light irradiation means (1, 2) is orthogonal to the axis 5. The optical axis 12 intersects both a first region 31 and a second region 32 of the side surface 30 of the rotary body 3. The first and second regions 31 and 32 are formed on side surfaces confronting each other with respect to the axis 5 of the rotary body 3. The beams coming from the light irradiation means (1, 2) are directed to the light receiving surface 40 of the photoelectric converting element 4 through the gratings of the first and second regions 31 and 32. The first and second regions 31 and 32 are formed on side surface opposite to each other with respect to the axis 5. The reason for providing a symmetric placement is to reduce a measuring error due to eccentricity between the central axis of the rotary body 3 and the axis 5.

A spacing d (hereinafter referred to as [a diameter d of the rotary body]) along the optical axis 12 between the gratings of the first and second regions 31 and 32 is set to satisfy the following relation:

$$d \cong N \frac{P^2}{\lambda} \qquad (N = 3)$$

$$P = \frac{\pi d}{n} \text{ (n is the total number of slits)}$$

where P is the grating pitch, and λ is the wavelength. The diameter d of the rotary body 3 is thus set. As a result, an image of the grating in the first region 31 of the side surface 30 of the rotary body 3 can be projected directly on the grating of the second region 32. In this case, there is no necessity for incorporating an image forming optical system into the hollow portion of the rotary body 3. The image projected on the grating is known as a Fourier image. This grating image is, i.e., a diffraction image formed by self-image-forming action of the grating concomitantly with a light diffractive phenomenon. The rotary body 3 in this embodiment assumes a cylindrical shape, and hence the Fourier image is bent somewhat, with the result that the contrast tends to decline. However, if the light irradiation means (1, 2) and the rotary body 3 are constructed to fulfill the following conditions, there is no problems in practical use.

$$\left( N - \frac{1}{4} \right) \frac{P^2}{\lambda} < d < \left( N + \frac{1}{4} \right) \frac{P^2}{\lambda}$$

(N is the natural number)

$$P = \frac{\pi d}{n} \text{ (n is the total number of slits)}$$

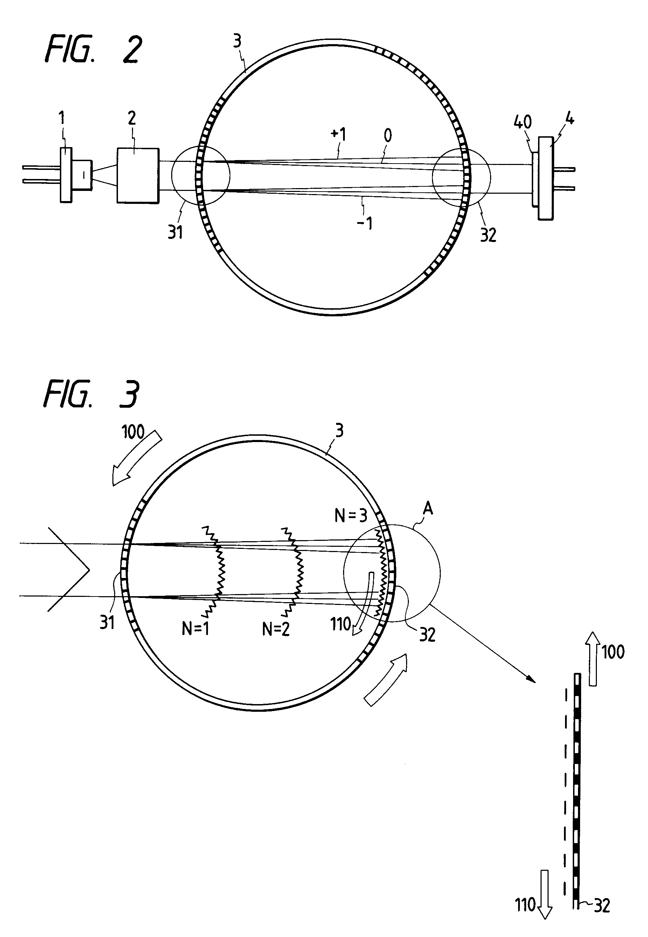

The following is a detailed description of the principle for measuring a rotation angle of the rotary body 3 of the encoder depicted in FIG. 1 with reference to FIGS. 2 and 3.

The beams emitted from the semiconductor laser 1 are collimated into parallel beams by means of a collimator lens system 2. The first region 31 of the rotary body 3 is illuminated with the parallel beams. The parallel beams are diffracted by the grating of the first region 31. 0th-order, ± first-order and ± second-order diffracted beams are produced from the grating of the first region 31. Two or three beams of the 0th-order and ± first-order diffracted beams interfere with each other. Due to this interference, the Fourier image of the grating of the region 31 is projected on the grating of the region 32. A shading pitch of the Fourier image is equal to the pitch P of the grating of the region 31. As described above, the Fourier image is bent along a curved surface of the region 32. This does not influence an accuracy of measurement so much. Note that the diameter d of the rotary body 3 is reduced to decrease the bend of the Fourier image.

Supposing that the rotary body 3 rotates, as illustrated in FIG. 3, in a direction indicated by an arrowed direction 100 (CCW direction), the Fourier image moves in an arrowed direction 110 (CW direction). At this time, the grating of the region 32 on which the Fourier image is projected is moving in the arrowed direction 100. Hence, a relative angular change between the Fourier image and the grating of the region 32 is 2θ when the rotary body rotates through an angle θ. A rotation angle can be measured with a resolving power that is twice the grating pitch.

The grating of the region 32 is illuminated with the Fourier image of the grating of the region 31. The beam traveling through the grating of the region 32 is incident on the light receiving surface 40 of the photoelectric converting element 4. The photoelectric converting element 4 converts the received beam into an electric signal. Based on this signal, the rotation angle of the rotary body 3 is measured. In the rotary encoder in this embodiment. as explained earlier, when the rotary body 3 rotates through the angle θ, the Fourier image of the grating of the region 31 and the grating of the region 32 relatively rotate through an angle 2θ. For this reason, if the total number of the slits 30a of the rotary body 3 is n, (2n)-pieces of sine wave pulses are outputted from the photoelectric converting element 4 per rotation of the rotary body 3. The rotation angle is measured by sequentially counting the sine wave pulses. A rotating speed of the rotary body 3 can be detected based on the sine wave pulses from the photoelectric converting element 4.

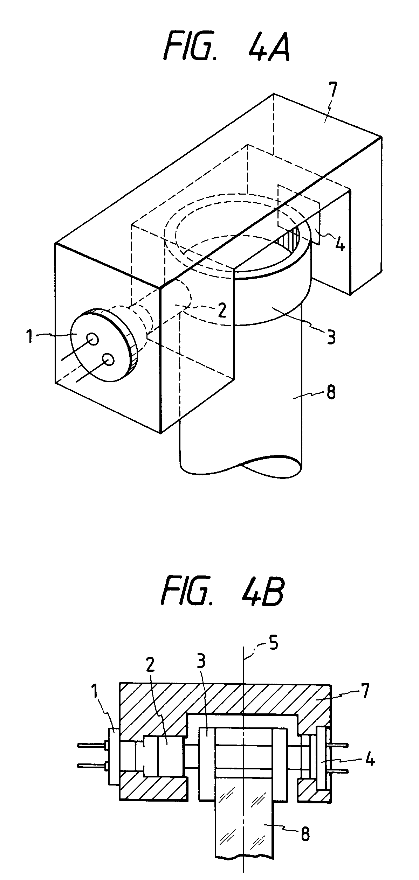

FIGS. 4A and 4B are views each showing a state where the encoder of FIG. 1 is unitized and fitted to the rotary driving shaft 8 (of a motor or the like) defined as a body to be measured. FIG. 4A is a perspective view thereof, while FIG. 4B is a sectional view thereof.

As illustrated in FIGS. 4A and 4B, the rotary body 3 incorporating a function of the optical scale is fitted directly to the rotary driving shaft 8. On the other hand, the semiconductor laser 1, the collimator lens system 2 and the photoelectric converting element 4 are fixedly attached to a substantially U-shaped holder 7. A refractive index type distributive lens assuming a rod-like configuration is herein employed as the collimator lens system 2. This intends to facilitate the unitization and miniaturize the system as a whole.

In the embodiment of FIG. 1, the region 31 on the side surface 30 of the rotary body is irradiated with the parallel beams. For correcting the bend of the Fourier image of the grating of the region 31, the beams falling on the region 31 are in some cases unparalleled. In this case, the region 31 is irradiated with divergent or convergent beams in alignment with the direction in which the bend is to be corrected.

The following is an elucidation of the reason why the semiconductor laser is used as a light source in the embodiment of FIG. 1. The semiconductor laser is small in size and emits good coherent monochromatic light. Other light sources are, however, usable on condition that the light sources are capable of emitting the beams by which the Fourier image of the grating of the region 31 can be projected on the grating of the region 32 in a desired contrast. This is the same with the following embodiments. On the other hand, the photoelectric converting element 4 used herein is small in size. If it is desired that a degradation in measurement sensitivity be prevented, a condensing lens may be interposed between the rotary body and the photoelectric converting element.

In the embodiment of FIG. 1, the rotary body is formed of a metallic material and with a multiplicity of slits. The rotary body may be made of a transparent material such as an acrylic material and the like. If composed of the transparent material, a multiplicity of shading portions may be arranged at equal spacings on an internal or external side surface of a hollow or solid rotary body. As demonstrated in, e.g., Japanese Patent Laid-Open Patent Application No. 62-3616 (corresponding to U.S. version; USP 4,820,918) made by the present applicant, a configuration of the shading portion is exemplified by a V-shaped groove. This groove is furrowed in an inner peripheral surface of the rotary body. The groove acts to fully reflect the beams incident thereon, thus shading the beams.

As discussed above, the rotary encoder in this embodiment includes the light irradiation means, the cylindrical rotary body and the photoelectric converting means. The cylindrical rotary body rotates about the rotary axis parallel to the generatrix of the cylinder. The transmitting portions and the light-blocking portions are alternately disposed on the side surface of the cylindrical rotary body in the rotational directions thereof, thus forming the gratings. The first region of the side surface of the rotary body is irradiated with the beam emitted from the light irradiation means. The beams passing through the grating of the first region are directed to the second region of the side surface, the second region being opposite to the first region with respect to the rotary axis of the rotary body. The photoelectric converting means receives and converts the beams penetrating the grating of the second region into the electric signals. The light irradiation means and the rotary body are constructed to project the Fourier image of the grating of the first region onto the grating of the second region.

In a preferable mode of this embodiment, as described above, the diameter d of the cylindrical rotary body is set to fulfill the following relation:

$$\left( N - \frac{1}{4} \right) \frac{P^2}{\lambda} < d < \left( N + \frac{1}{4} \right) \frac{P^2}{\lambda}$$

(N is the natural number)

where P is the grating pitch, and $\lambda$ is the wavelength of the light emerging from the light irradiation means. The transmitting portions and the shading portions are alternately regularly arranged over the entire side surface of the cylindrical rotary body. In this case, the grating pitch P is expressed such as:

$$P = \frac{\pi d}{n}$$

where n is the total number of the transmitting portions.

As discussed above, in this embodiment the light irradiation means and the rotary body are so constructed that the Fourier image of the grating of the first region of the cylindrical body is projected on the grating of the second region. With this arrangement, a rotation quantity of the rotary body can be measured with a high resolving power without incorporating an image forming optical system into the interior (hollow portion) of the rotary body. It is therefore possible to provide the small-sized rotary encoder having the high resolving power.

In this embodiment, the measuring accuracy does not degrade even when causing a thrust displacement or deflection of the mounting surface of the cylindrical rotary body with respect to the rotary axis.

The cylindrical rotary body can be miniaturized, and hence an inertial force is decreased. Vibrations of the rotary body which is on the measurement are thereby reduced. Consequently, the measuring accuracy is stabilized.

Even if the cylindrical rotary body stretches and contracts in the radial directions due to a thermal influence, it is feasible to keep constant the positional relation between the Fourier image of the grating of the first region and the light irradiation means of the grating of the second region in the direction of the optical axis. For this reason, the thermal influence does not degrade the measuring accuracy.

Because of unnecessity for the image forming optical system, it is easy to position the respective components such as the light irradiation means, the cylindrical rotary body and the photoelectric converting means. Besides, the device is readily unitized.

An embodiment which will be next described is arranged in the following manner. A cylindrical grating unit employed for the encoder involves the use of a new type of diffraction gratings exhibiting complex functions unlike conventional amplitude type or phase type diffraction gratings. The complex functions herein connote the following two functions: (1) a function as the amplitude type diffraction gratings and (2) a wavefront splitting function (a function to generate a phase-difference signal).

More specifically, a grating unit of a cylindrical scale has a transmission property. This grating unit attains the two functions explained above by use of an optical scale. This optical scale includes this grating unit constructed by arranging rugged portions each having a surface inclined to an incident beam at equal spacings in the peripheral direction of an internal side surface of the scale.

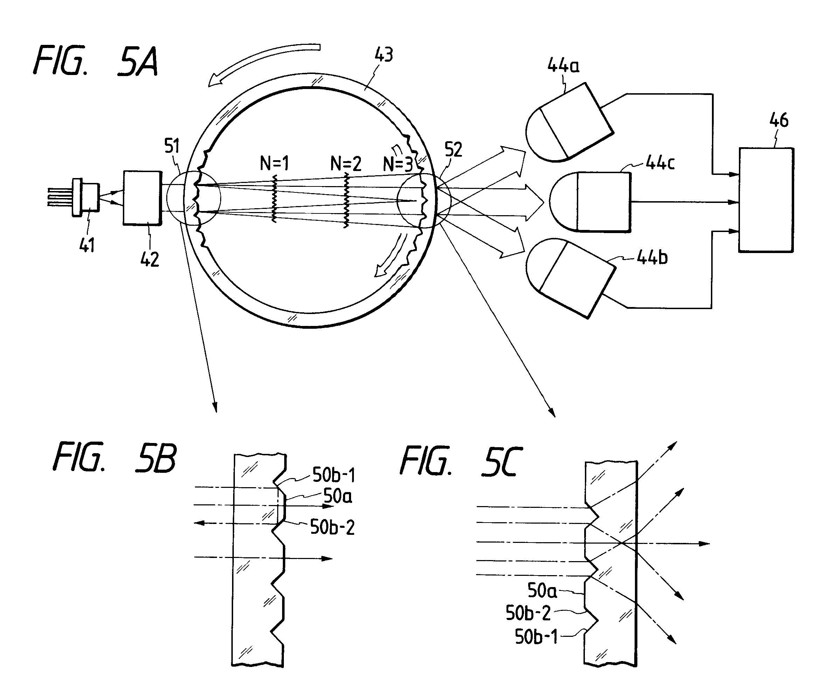

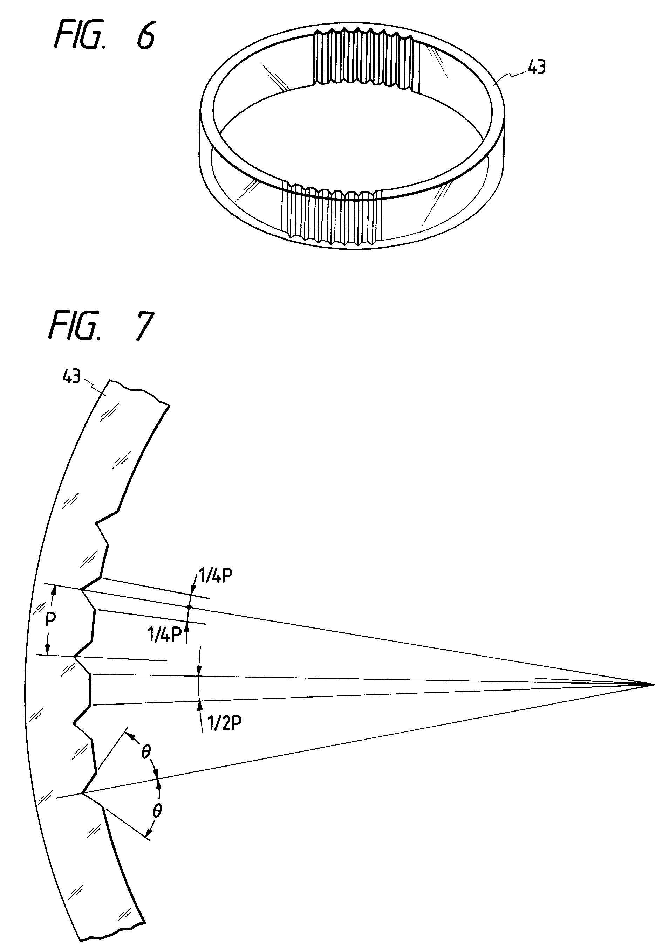

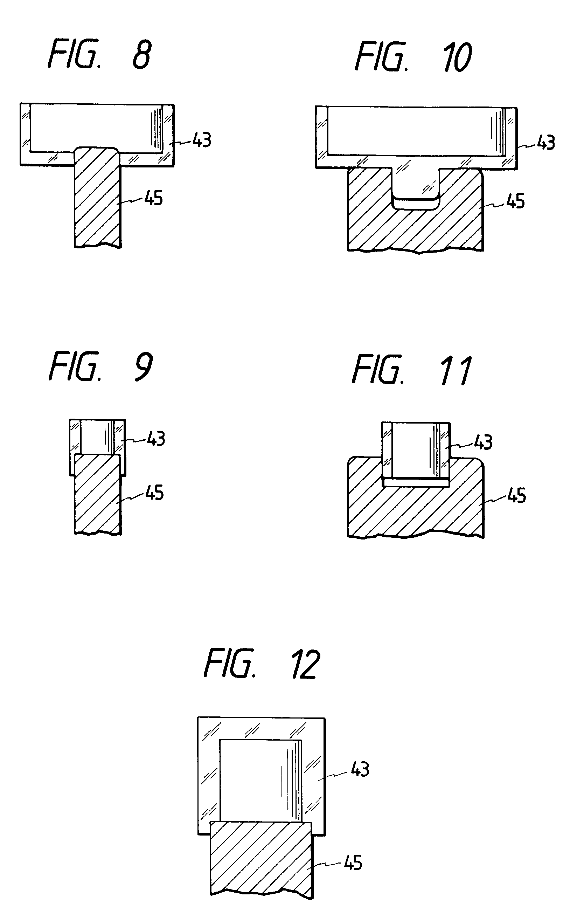

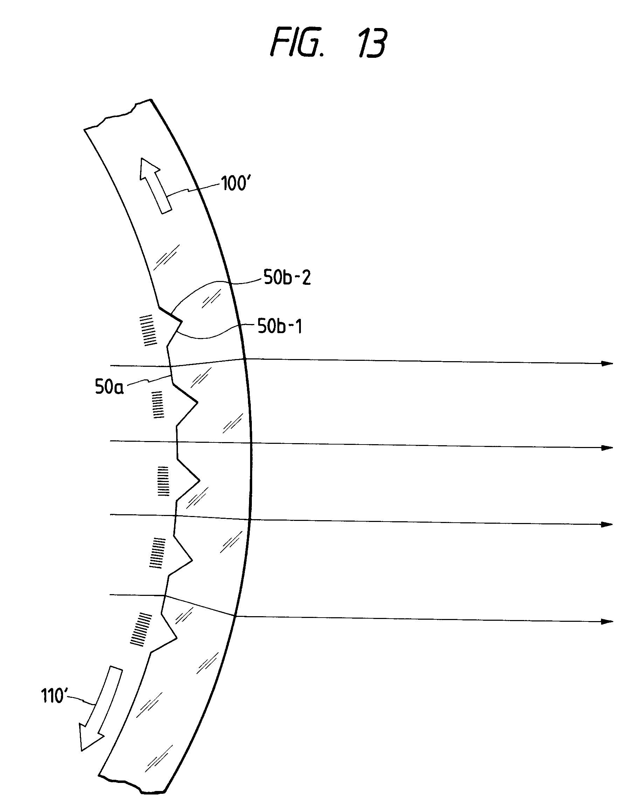

FIG. 5A is a view illustrating a construction of a second embodiment of this invention. Referring to FIG. 5A, the numeral 41 designates a semiconductor laser for generating a coherent beam having a wavelength $\lambda$ (= 780 nm). A collimator lens system generally indicated at 42 serves to collimate divergent beams emerging from the semiconductor laser 41 into substantially parallel beams. The semiconductor laser 41 and the collimator lens system 42 are combined to constitute a light irradiation means. A rotary optical scale 43 including a grating unit rotates in any one of arrowed directions. FIG. 6 is a perspective view depicting the scale 43. The scale 43 is composed of an optical material exhibiting a transmission property; and at least the grating unit thereof has the transmission property. Furrowed in the internal side surface of the cylindrical scale 43 are a multiplicity of V-shaped grooves arranged at equal space over the entire periphery in the peripheral direction. The grating unit is thus formed. Referring back to FIG. 5A, photodetectors 44a, 44b and 44c serving as a light receiving means are disposed in positions confronting the light irradiation means, with the scale 43 interposed therebetween. Outputs of the respective photodetectors are connected to a signal processing circuit 46. The signal processing circuit 46 includes a pulse count circuit, a circuit for discerning the rotational direction and a signal interpolation processing circuit. The scale 43 is connected to a rotary driving shaft of a motor or the like. The scale 43 is employed as an optical scale for detecting a rotation quantity of the driving shaft. FIGS. 8 through 12 illustrate some variations of a method of mounting the scale 43. In any variation, the scale 43 is fitted directly to the rotary driving shaft 45. With this arrangement, it is possible to keep high both a fitting accuracy and a concentricity between the fitting portion and the grating surface serving as a gradation for detecting the rotations. Especially in the variant form depicted in FIG. 12, an interior of the cylinder in which the gratings are formed is hermetically closed. This yields advantages of eliminating adhesion of dusts or oil to the grating unit and extremely increasing a dust protective capability.

FIG. 7 is a view illustrating in detail the grating unit of the scale 43. The V-shaped grooves and the flat portions are alternately arranged, thus forming gratings. (n)-pieces of V-shaped grooves are furrowed in the cylindrical internal side surface at pitches P (rad) (n x P = $2\pi$rad) in the peripheral direction. A width of the V-shaped groove is 1/2 P (rad). Each of the two flat surfaces for forming the V-shaped groove has a width of 1/4 P (rad). Each oblique surface is inclined at an angle greater than a critical angle i.e., $\theta$ = 45° in this embodiment with respect to a straight line which connects the center to the bottom of the V-shaped groove.

A spacing d (an inside diameter of the scale) along the optical axis between gratings of first and second regions 51 and 52 of the scale 43 is set to satisfy the following relation:

$$d = N \cdot P^2 / \lambda \ (N = 3)$$
$$P = \pi d / n \ (n \text{ is the total number of slits})$$

where P is the grating pitch, and $\lambda$ is the wavelength in this embodiment. The diameter d of the scale 43 is thus set. It is therefore possible to project an image of the grating of the first region 51 of the side surface of the scale 43 directly on the grating of the second region 52. In this case, there is no necessity for incorporating an image forming optical system into the hollow portion of the scale 43. The grating image projected thereon is, as mentioned before, referred to as the Fourier image. The grating image is formed by the self-image-forming action of the grating concomitantly with the light diffractive phenomenon. The scale 43 in this embodiment assumes a cylindrical configuration and therefore has a tendency in which the contrast degrades due to a slight bend of the Fourier image. There is no problem in practical use, if the light irradiation means (41, 42) and the scale 43 are constructed to satisfy the following condition:

$$(N - 1/4) \, P^2 / \lambda < d < (N + 1/4) \, P^2 / \lambda$$

(N is the natural number)

$$P = \pi d / n \text{ (n is the total number of slits)}$$

Note that the scale 43 is formed of plastic in this embodiment. This material is suitable for mass-production by a manufacturing method such as injection molding or compression molding. Namely, it is feasible to provide the encoder at still lower costs than by a conventional processing method using a photolitho process.

The encoder having a construction of this embodiment is arranged in the following way. When an outside ambient temperature changes, the diameter d of the scale, the grating pitch P and the wavelength $\lambda$ of the semiconductor laser slightly vary. As a result, there is caused a relative positional deviation between a Fourier image forming position and a grating surface position. This is probably a factor for a decrease in S/N ratio of the detecting signal. For instance, when the temperature rises, the diameter d of the scale increases. Concomitantly with this increase, a value of the grating pitch P is also incremented. Besides, the wavelength $\lambda$ shifts to a larger wavelength side. In this case, a position L of the Fourier image changes at a ratio of $P^2/\lambda$, wherein $L = N \cdot P^2 /\lambda$. A material of the scale and characteristics of the semiconductor laser are selected so that a variation quantity ($\Delta d$) of the diameter d of the scale due to changes in temperature approximates to a shift quantity ($\Delta L$) of the Fourier image to the greatest possible degree. Hence, it is feasible to reduce the relative positional deviation between the grating surface position and the Fourier image forming position. Even then causing the changes in the outside ambient temperature, a degradation in the S/N ratio of the detecting signal is reduced. In the semiconductor laser having a wavelength 780 nm employed in this embodiment, a wavelength fluctuation on the order of 10 nm is caused for a temperature change of 50°C. It is preferable to adopt a scale material exhibiting a relatively large coefficient of thermal expansion. In accordance with this embodiment, the scale 43 is made of plastic (acrylic resin where n = 1.49). The coefficient of thermal expansion is greater than that of glass. Hence, there is produced such an advantage that a drop in the S/N ratio of the output signal due to the fluctuations in temperature is further reduced. The encoder can be offered at low costs. In combination with this advantage, the plastic is quite suited as a material of the encoder scale in this embodiment.

The measuring principle of this embodiment will next be described with reference to FIGS. 5A through 5C.

The beams coming from the semiconductor laser 41 are converted into a convergent beam by adjusting a position of the collimator lens system 42. The convergent beam is incident on a first region 51 of the scale 43. The reason why the convergent beam is used will be elucidated. The side surface of the scale 43 has a refractive power equivalent to that of a concave lens due to a difference in curvature between the external and internal side surfaces. The beams entering the scale 43 become substantially parallel beams owing to action of the concave lens.

The convergent beam, as illustrated in FIG. 5B, reaches the grating unit of the first region. Then, the convergent beams travel into the cylinder after passing through a surface 50a. The beam which reaches a surface 50b-1 of the grating unit is deflected to a surface 50b-2 after undergoing full reflection as shown in the Figure. It is because the oblique surface is inclined at more than a critical angle. The beam is also fully reflected by a surface 50b-2. The beam, which reaches the surface 50b-1, is eventually returned substantially in the incident direction without traveling into the interior of the rotary body. Similarly, the beam which reaches the surface 50b-2 is returned by repeating the full reflection. Hence, the beam, which reaches a range defined by the two oblique surfaces 50b-1 and 50b-2 constituting the V-shaped groove in the first region 51, is reflected without advancing into the cylinder. Only the beam, which reaches the surface 50a, advances into the cylinder. That is, the V-shaped groove diffraction grating in the first region 51 has the same action as that of the transmission type amplitude grating.

The beams are diffracted by the grating unit of the first region 51, whereby the diffraction beams of 0th-order, ± first-order, ± second-order,... are generated by action of the gratings. Two or three beams of the 0th-order and ± first-order beams interfere with each other. As a result of this interference, the Fourier image of the grating of the first region 51 is formed inwardly of the scale 43. The Fourier image is repeatedly formed at a basic distance L in positions of integral multiples of L. In this embodiment, the light source wavelength λ, the grating pitch P and the position of the collimator lens system 2 are set so that the 3rd (N = 3) Fourier image is formed on the grating surface of the second region 52. A shading pitch of this Fourier image is equal to the grating pitch P of the first and second regions 51 and 52.

The beam is, as illustrated in FIG. 5c, substantially perpendicularly incident on the surface 50a in the second region 52. Hence, the beam penetrates straight the surface and reaches the photodetector 44c. The beams, which will reach the two oblique surfaces 50b-1 and 50b-2 cooperating to form the V-shaped groove surface, are incident thereon at an incident angle of approximately 45°. Consequently, the beams are largely refracted in different directions and reach the photodetectors 44a and 44b, respectively. In the second region, the beams travel separately in the three directions. It is because there are provided totally three kinds of surfaces inclined in differenct directions i.e., the two oblique surfaces inclined in different directions with respect to the incident beams and the flat surface between the V-shaped grooves. These beams respectively reach the photodetectors 44a, 44b and 44c disposed corresponding to the individual surfaces. Namely, the V-shaped groove gratings function as light wavefront splitting elements in the second region 52.

As discussed above, the scale in this embodiment characteristically has the two functions. The scale functions as the amplitude type diffraction grating in the first region 51 and as the wavefront splitting elements for detecting two phases in the second region 52.

The following is an explanation of variations in light quantity detected by the photodetectors 44a, 44b and 44c when the scale 43 rotates. It is herein assumed that the scale 43 rotates counterclockwise.

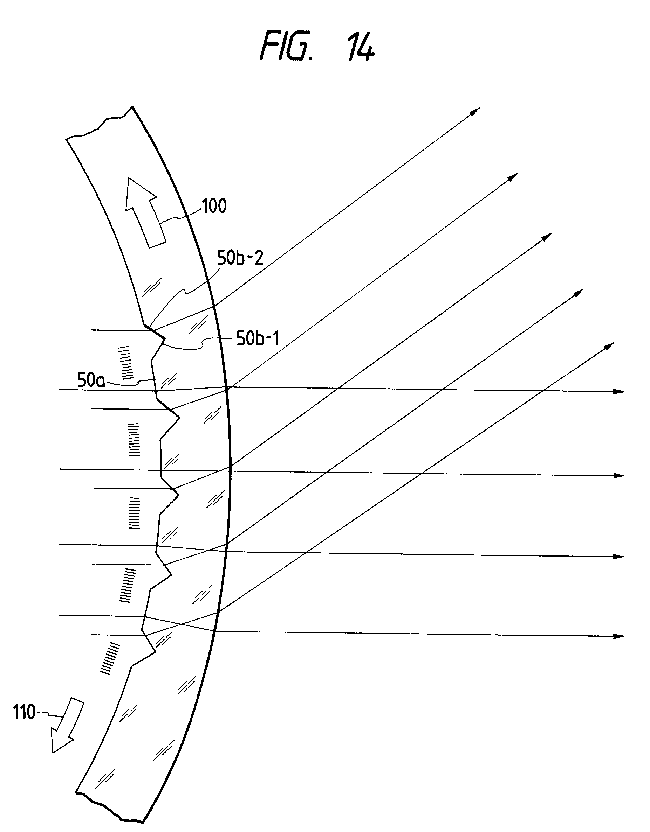

FIG. 13 depicts a situation where shading grating images having a period equal to the grating pitch P are overlapped in the second regions 52. In this case, a bright part of the shading grating image is overlapped with a portion 50a. The beams penetrate a portion 50a and concentrate at the photodetector 44c. FIG. 14 shows a situation where the diffraction grating unit rotates counterclockwise (in an arrowed direction 100) through 1/8 P from a state of FIG. 13. In this case, the shading grating image moves in an arrowed direction 110. At this time, some of the beams penetrate the portion 50a, and the rest of the beams reach 50b-2. Therefore, one-half of the beams incident on the second region 52 are incident on the photodetector 44c, while the remaining half of beams are incident on the photodetector 44a.

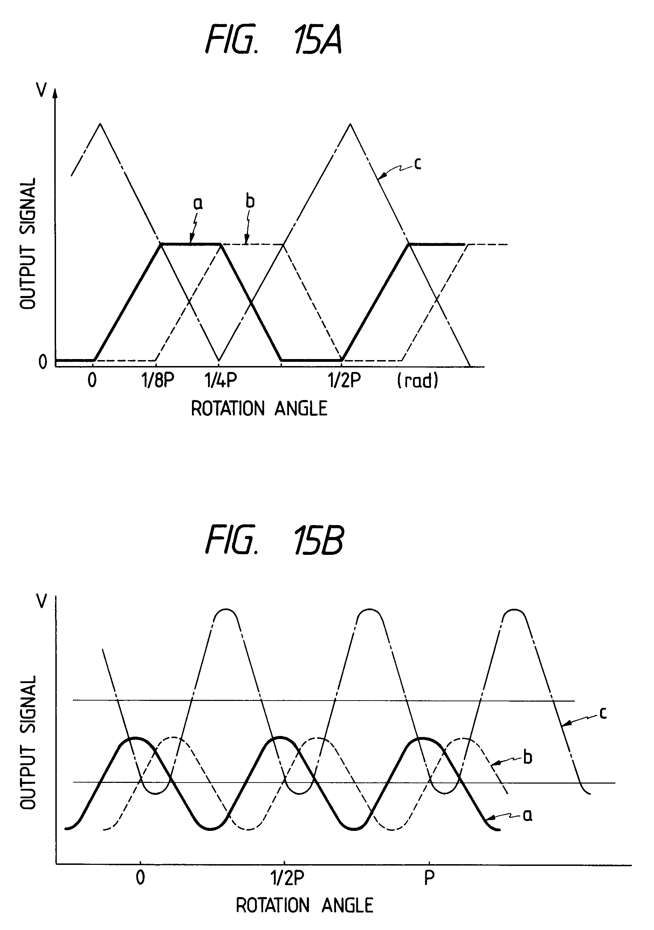

As explained above, a quantity balance of beams incident on the respective photodetectors changes corresponding to the relative displacement between the positions of grating and the Fourier image. As a result, the light quantity variations concomitant with the rotations of the grating are, as shown in FIG. 15A, obtained on the assumption that the scale 43 rotates counterclockwise. The axis of abscissa herein indicates a rotation quantity of the cylindrical grating, while the axis of ordinate indicates a light receiving quantity. Signals a, b and c correspond to the photodetectors 44a, 44b and 44c. Note that whereas in the clockwise rotations of the scale 43, the symbol a is an output of 44b, b is an output of 44a, and c is an output of 44c. The rotational directions can be discerned based on this difference. FIG. 15A illustrates theoretical variations in light quantity, wherein the contrast of the Fourier image is extremely high enough to approximate to an ideal level. As a matter of fact, however, the contrast of the Fourier image is rather low. Hence, each light quantity, as shown in FIG. 15B, changes in a substantially sine wave-like configuration.

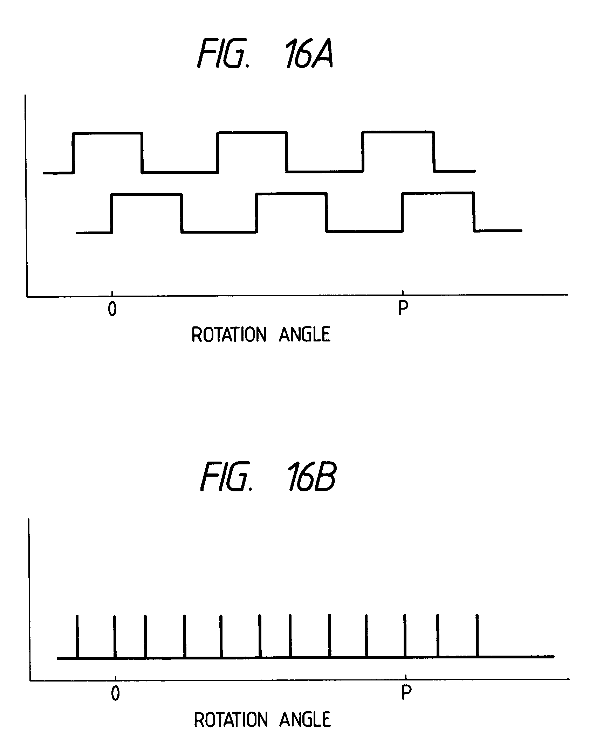

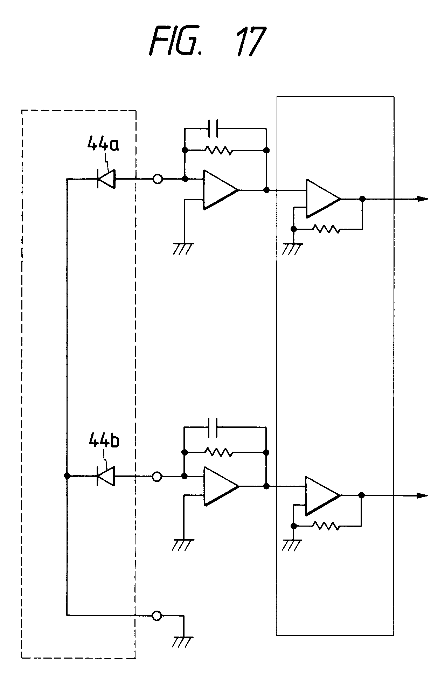

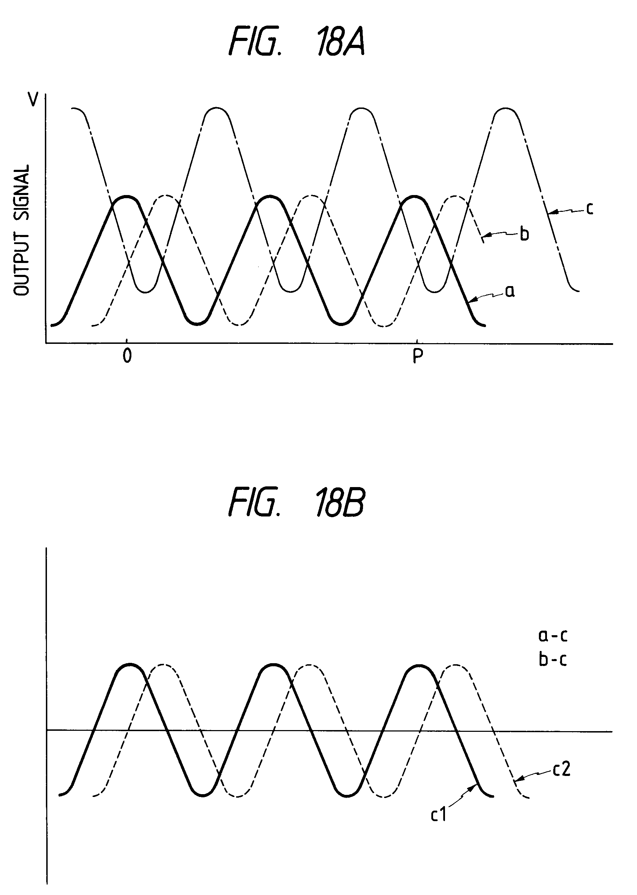

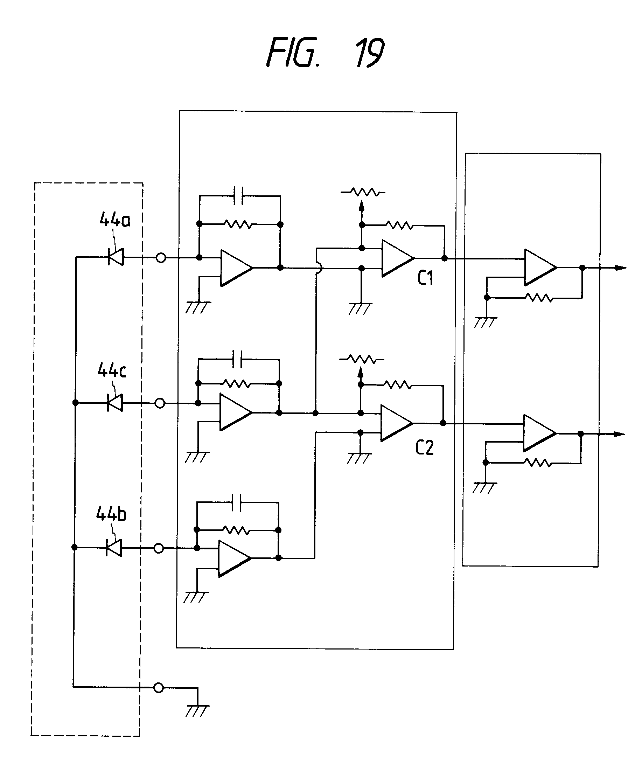

There will next be described specifically electric processing in a signal processing circuit 46 on the basis of these signals. FIG. 17 shows one example of the signal processing circuit. When the grating unit rotates through P (rad), sine wave-like output waveforms of two periods appear. Particularly in this case, a phasic relation between a and b shows a phase difference of 90°. Therefore, only the output signals a and b are employed. The output signals a and b are changed, as illustrated in FIG. 16A, in a rectangular waveform through a comparator circuit. Pulse signals are obtained at rise and fall portions of the rectangular waveforms. As shown in FIG. 16B, eight pulses can be obtained at a rotation angle of p (rad). Hence, when the number of gratings during one rotation is set to n, a rotation angle signal of 8nP/R is detectable. Note that in this case, since the signal c is unnecessary, the device may be constructed by eliminating the photodetector 44c shown in FIG. 5A.

In the method described above, only the signals a and b having a phase difference of 90° are used. Fundamentally, the signal c is not required. It is, however, possible to further enhance the accuracy by use of the signal c. This method will hereinafter be described.

The width of the V-shaped groove is ideally precisely 1/2 P. In fact, however, the width deviates slightly from the ideal value depending on the manufacturing accuracy in some cases. Correspondingly, the output signals do not come to ideal values, with the result that the phase difference between the signals a and b does not accurately becomes 90°. It follows that the accuracy of the eventually obtained pulses is degraded. FIG. 18 is an explanatory diagram showing the output waveforms in that instance.

Now supposing that the V-shaped groove of the cylindrical grating employed is worked to have a width larger than 1/2 P over the entire periphery through 360°, the phase difference between the signals a and b is a little bit greater than 90°. This relation is demonstrated by FIG. 18A.

Adopting circuitry depicted in FIG. 19, differential outputs between the signals a and c and between the signals b and c are obtained by using the output signal of the photodetector 44c. As illustrated in FIG. 18B, two signals C1 and C2 are newly created. Amplitude gains of the respective signals c, b and a in this circuit are adequately adjusted, thereby making it possible to set the phase difference between the synthesized signals C1 and C2 accurately to 90°. The discernment of rotational directions and the interpolation can be effected by use of the two signals C1 and C2. The output of the photodetector 44c is thus utilized, whereby a highly accurate detection of rotation can be performed while compensating the manufacturing accuracy of the gratings.

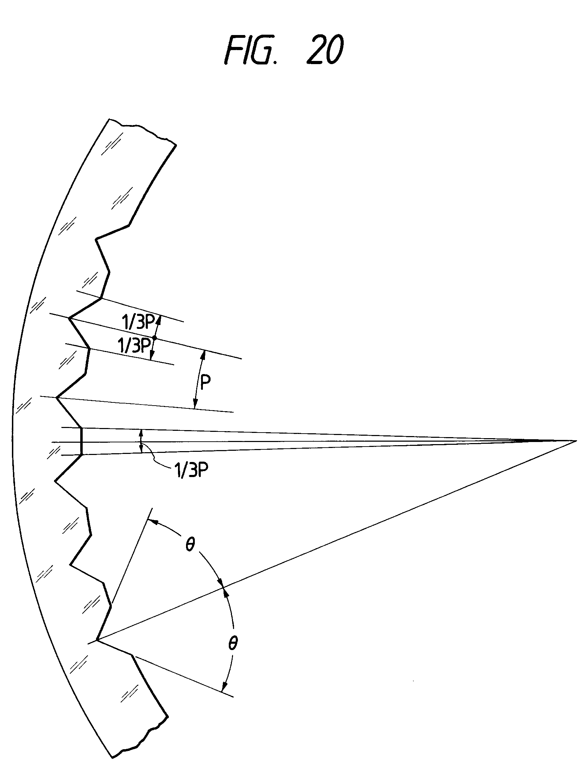

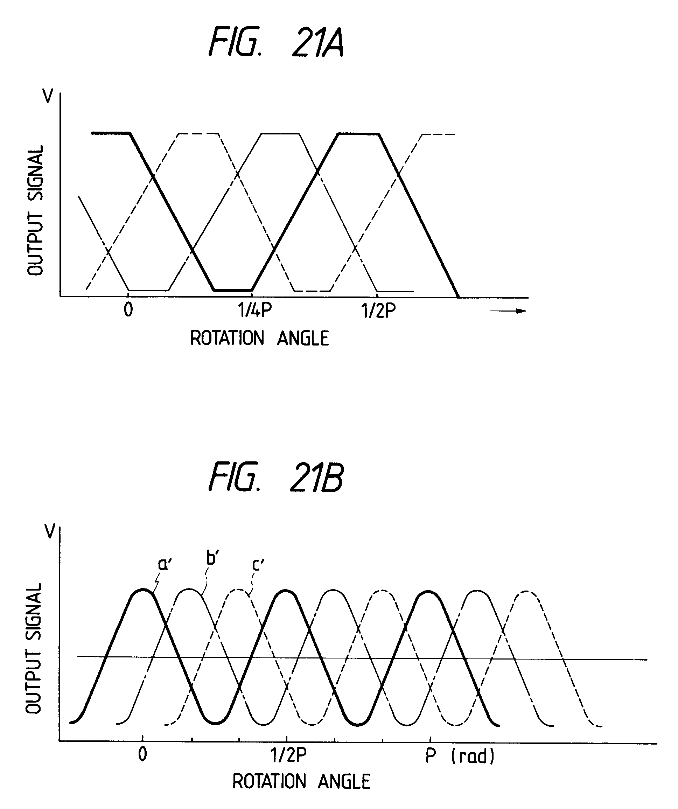

Next, a third embodiment in which a much higher accuracy is attainable will be given. In this embodiment, as illustrated in FIG. 20, the grating takes such a form that a width of the V-shaped groove is set to 2/3 P of the grating pitch P. FIG. 21A shows theoretical waveforms of the output signals of the photodetectors 44a, 44b and 44c at that time. FIG. 21B depicts waveforms a', b' and c' obtained actually. In this case, there are acquired 3-phase output signals each exhibiting a phase difference of 120° where the amplitude levels are equally arranged. In this embodiment, a still higher resolving power is obtained by employing theses 3-phase output signals.

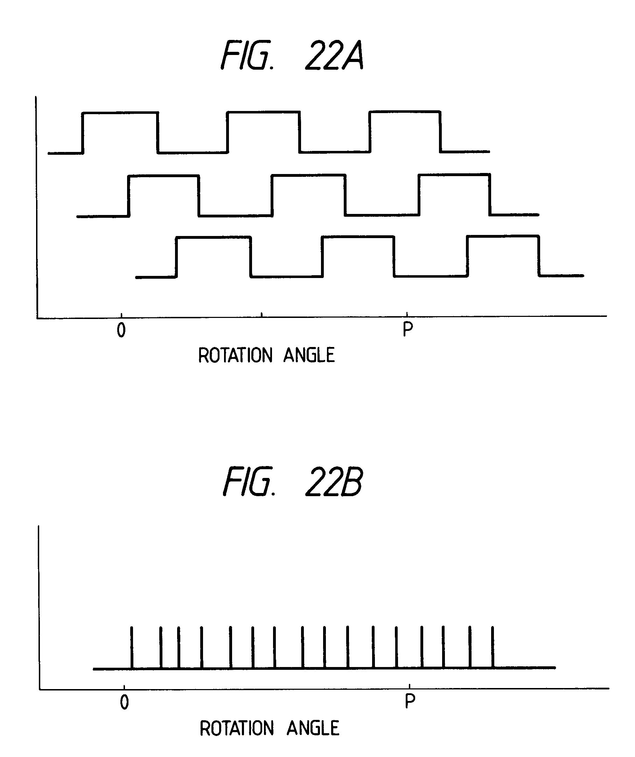

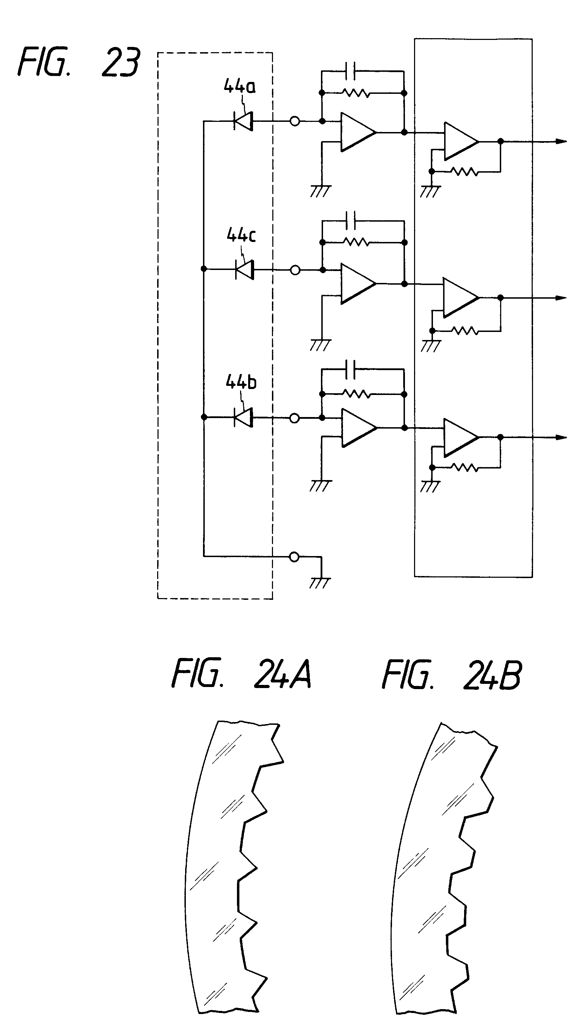

To be specific, the 3-phase signals are changed, as illustrated in FIG. 22A, in a rectangular waveform through the respective comparators by use of a signal processing circuit of FIG. 23. The signals are, as depicted in FIG. 22B, pulsed at timings of the rise and fall of the individual signals. The cylindrical grating unit rotates through P (rad), and it follows that 12 pulses are obtained. Therefore, when the number of gratings is set to n, a rotation angle signal of 12n P/R is obtained. 4-fold pulsing is effected in the previous mode where the 2-phase signals are employed. In contrast, much finer 6-fold pulsing can be performed in this mode where the 3-phase signals are employed.

Note that in the embodiments discussed so far, the V-shaped grooves are arranged at the equal spacings to form the rugged grating unit. FIG. 24A shows a variant from in which V-shaped crests and flat portions may be alternately arranged to provide ruggedness. Another example of the rugged configuration is given in FIG. 24B. In addition, each of the rugged gratings may be formed into a curved surface. The rugged configuration is not necessarily symmetric but may be asymmetric. In any case, the rugged portions including the surfaces inclined to the incident beams are arranged at the equal spacings to constitute the grating unit. The scale is usable on condition that the scale has a function as the amplitude type diffraction grating and a wavefront splitting function as well.

In the embodiments given above, the diplophase signals are fetched by the plurality of photodetectors. If single-phase signals are satisfactory, a single piece of photodetector 44c in FIG. 5A may suffice.

The embodiment described above has dealt with the rotary encoders based on the principle of a so-called talbot interference. One of other considerable arrangements is that an optical scale furrowed with V-shaped grooves is applied to an encoder incorporating an image forming optical system, the encoder being disclosed in Japanese Patent Laid-Open Application No. 63-81212.

The light source usable in the present invention is not limited to the semiconductor laser but may be, e.g., a point light source LED. The costs can be further reduced by using the LED which is more inexpensive than the semiconductor laser.

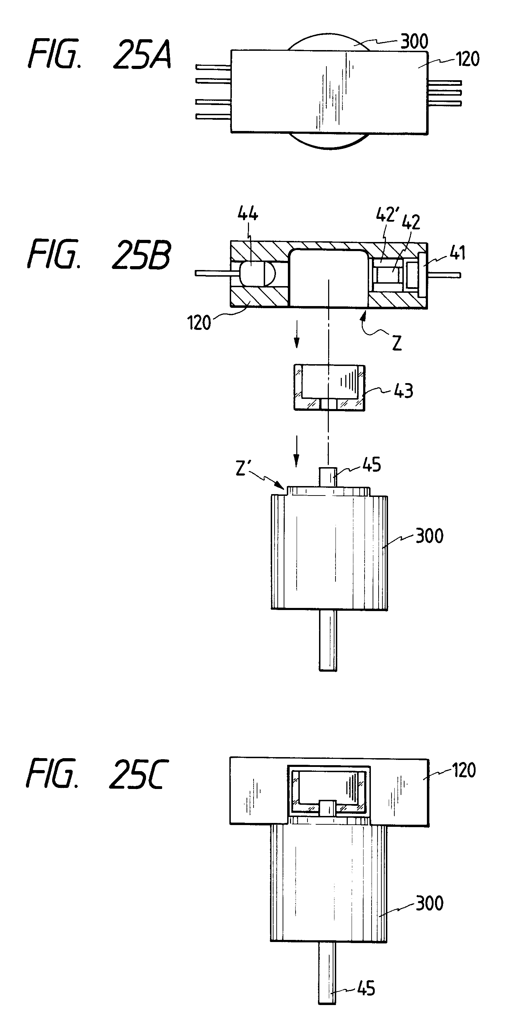

FIG. 25 is a block diagram showing an application example of the above-mentioned encoder, wherein the encoder is attached to a rotation output unit of a motor to provide a united motor encoder. FIG. 25A is a top view thereof. FIG. 25B is a side elevation showing a state where the motor encoder is assembled. FIG. 25C is a side elevation depicting the completed motor encoder. The scale 43 is at first attached to a rotary shaft 45 at the rear end of a motor 300 in any one of the manners described in FIGS. 8 through 12. Members such as a semiconductor laser 41, a collimator lens 42, a lens holder 42' and a photodetector 44 (any one of the above-described photodetectors 44a, 44b and 44c) are combined into a united detecting head unit 120. This detecting head unit 120 is covered on the scale 43. A fitting portion Z of the detecting head unit 120 is joined to a fitting portion Z' of the case rear end of the motor 300, thus uniting the components as shown in FIG. 25C.

The rotary scale is secured directly to the rotation output unit of the motor in this manner. The detecting head unit for reading the rotations is made integral with the motor case. The motor encoder which is easy of alignment can be attained with a simple construction. Furthermore, the rotary scale and the detecting head unit are configured separately, thereby facilitating the assembly.

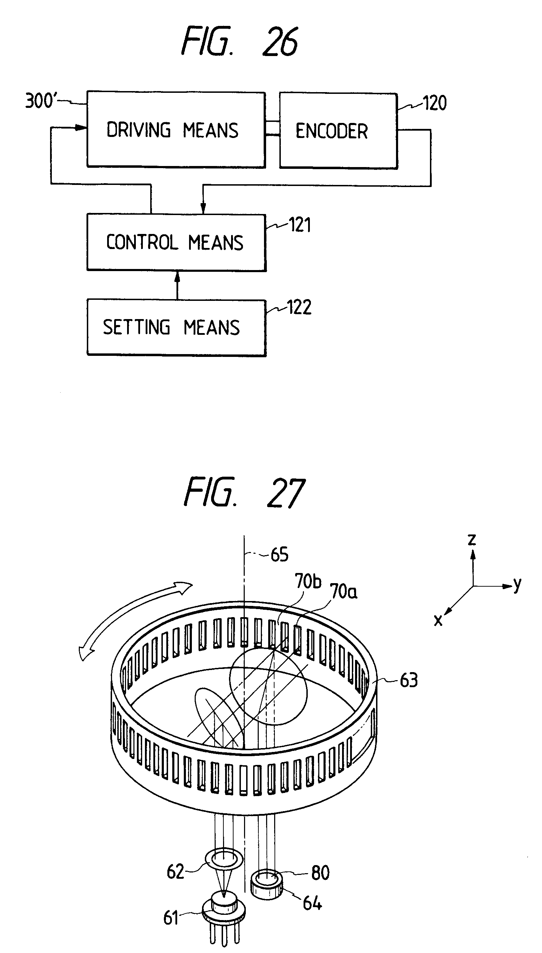

FIG. 26 is a system block diagram of a driving system including the rotary encoder, showing one example of a system using the encoder given above. A driving means 300' has driving sources such as a motor, an actuator and an internal combustion engine. The encoder 120 explained above is connected to a rotation output unit of the driving means 300', thereby detecting driving conditions such as a rotation quantity and a rotating speed. A detection output of this encoder is fed back to a control means 121. In the control means, a driving signal is transmitted to the driving means 300' to develop a driving condition set by a setting means 122. This type of feedback system is thus configured, whereby the rotational status set by the setting means can be obtained. This driving system is applicable to a variety of machine tools or manufacturing machines, measuring instruments, robots, cameras, audio devices and information devices. The driving system is not limited to these devices but is applicable more widely to the whole devices incorporating the driving means.

The cylindrical optical scales employed in the first and second embodiments can be manufactured by, e.g., plastic molding. The optical scales can be provided at quite low costs. The cylindrical scales used therein serve to miniaturize the device and decrease the inertia. Besides, the cylindrical scales facilitate the assembly.

In accordance with an embodiment which will hereinafter be described, a rotary encoder comprises: a hollow body; gratings arranged in a rotation detecting direction in the hollow body; a light irradiation means for irradiating a first region formed with the grating with a beam from inside of the hollow body and projecting a Fourier image of the grating of the first region on the grating of a second region different from the first region of the hollow body by using the beam reflected from the grating of the first region; and a photodetector means for receiving the beam reflected from the grating of the second region. These components are configures to project the Fourier image of the grating of the first region on the grating of the second region. This configuration eliminates the necessity for incorporating the image forming optical system in an interior (hollow portion) of the hollow body. It is therefore feasible to reduce a diameter of the hollow body. An extremely small-sized rotary encoder can be provided.

FIG. 27 is a perspective view showing a fourth embodiment of the invention. Referring to FIG. 27, the numeral 61 designates a semiconductor laser for emitting coherent beams (monochromatic beams) each having a wavelength λ. A collimator lens system 62 functions to collimate the divergent beams emerging from the semiconductor laser 61 into substantially parallel beams within an x-z plane. The collimator lens system involves the use of, for instance, anamorphic lens or the like; and the beams are emitted in a convergent stat in a direction perpendicular to the x-z plane. A hollow body 63 is herein a cylindrical rotary body. The hollow body 63 rotates in arrowed directions about a rotary axis 65 parallel to the generatrix of the cylinder. The rotary body 63 is connected via an unillustrated connector to a driving shaft of a motor or the like. The rotary body 63 is employed as an optical scale for detecting a rotation quantity of the driving shaft. The axis 65 coincides with the central axis of the driving shaft. The axis 65 also substantially coincides with the central axis of the rotary body.

The rotary body 63 is composed of a light reflective material such as a metal, glass or plastic. A side surface 70 of the rotary body 63 is formed with a multiplicity of slits 70a arranged at equal spacings at pitches P in rotational directions thereof. The beams incident on the side surface 70 of the rotary body 63 travel through the slits 70a and are reflected by portions 70b between the slits 70a. Namely, the slits 70a are transmitting portions, whereas the portions 70b are reflecting portions. These transmitting potions and the reflecting portions are alternately regularly arranged in the rotational directions, thus forming the gratings. An optical scale is thus constructed. A photoelectric converting element 64 consists of photodetectors. The photoelectric converting element 64 outputs an electric signal corresponding to an intensity of the beam incident on a light receiving surface 80.

The numerals 66 and 67 represent half-mirrors.

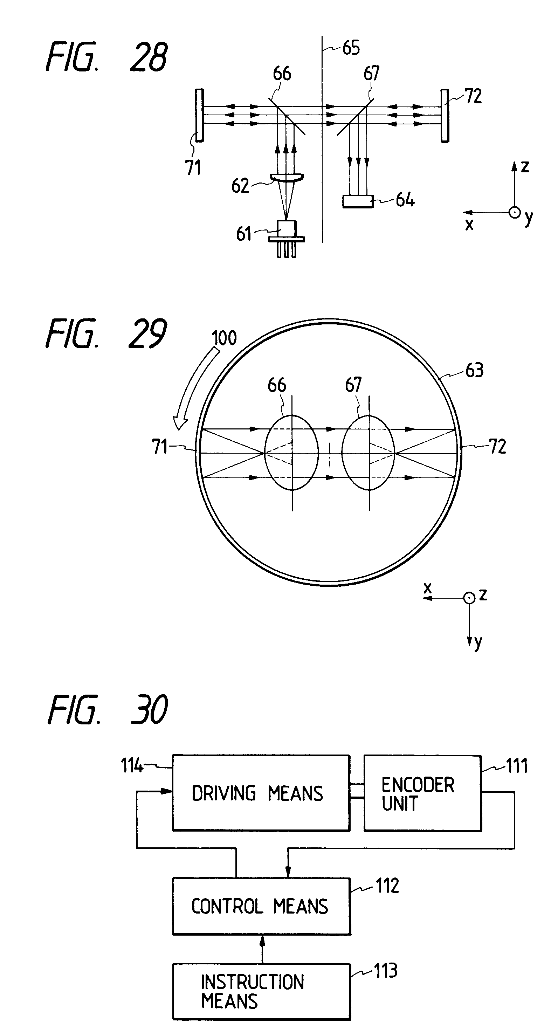

FIG. 28 is a sectional view showing the fourth embodiment of this invention. The present invention will hereinafter be explained with reference to FIG. 28.

The beams emerging from the semiconductor laser 61 are collimated into substantially parallel beams by means of the collimator lens system 62. A part of the parallel beams are reflected leftwards by the half-mirror 66 and incident upon a first region 71 of the rotary body 63.

The beam reflected by the first region again reaches the half-mirror 66. The beam passing through the half-mirror 66 further penetrates the half-mirror 67. A second region 72 is irradiated with these beams.

A spacing d (hereinafter referred to as [a diameter d of the rotary body]) along the optical axis between the gratings of the first and second regions 71 and 72 is set to satisfy the following relation:

$$d \cong N \frac{P^2}{\lambda} \qquad (N = 3)$$

$$P = \frac{\pi d}{n} \text{ (n is the total number of slits)}$$

where P is the grating pitch, and $\lambda$ is the wavelength. The diameter d of the rotary body 63 is thus set. As a result, an image of the grating in the first region 71 of the side surface 70 of the rotary body 63 can be projected directly on the grating of the second region 72. In this case, there is no necessity for incorporating an image forming optical system into the hollow portion of the rotary body 63. The grating image projected thereon is known as a Fourier image. This grating image is formed by self-image-forming action of the grating concomitantly with a light diffractive phenomenon. The rotary body 63 in this embodiment assumes a cylindrical shape, and hence the Fourier image is bent somewhat, with the result that the contrast tends to degrade. However, if the semiconductor laser 61, the collimator lens system 62, the half-mirrors 66, 67 and the rotary body 63 are constructed to fulfill the following conditions, there is no problems in practical use.

$$\left( N - \frac{1}{4} \right) \frac{P^2}{\lambda} < d < \left( N + \frac{1}{4} \right) \frac{P^2}{\lambda}$$

(N is the natural number)

$$P = \frac{\pi d}{n} \text{ (n is the total number of slits)}$$

The above is a description of the beams traveling in directions parallel to the sheet surface in FIG. 28. The beams traveling in directions perpendicular to the sheet surface will be explained.

FIG. 29 is a top view showing the embodiment of this invention.

The beams emerging from the collimator lens system 62 are, as explained earlier, substantially parallel beams in the direction parallel to the sheet surface (within the x-z plane) in FIG. 28. Whereas in the directions perpendicular to the sheet surface in FIG. 28, the beams, after being reflected by the internal surface of the rotary body 63, become the substantially parallel beams.

Namely, a distance from the reflection surface of the rotary body 63 is set to have a focal point at a point of 1/2 of a radius of curvature of the reflection surface.

With this arrangement, the beams reflected from the cylindrical reflection portion of the rotary body become the substantially parallel beams. The parallel beams then go to the second region 72.

The principle of detecting a rotation angle will be described in detail with reference to FIG. 29.

The beams coming from the semiconductor laser 61 are reflected by the reflection surface of the rotary body 63. The reflected beams are collimated into the parallel beams by the collimator lens system 62. The first region 71 of the rotary body 63 is illuminated with the parallel beams. The parallel beams are diffracted by the grating of the first region 71. 0th-order, ± first-order and ± second-order diffracted beams are produced from the grating of the first region 71. Two or three beams of the 0th-order and ± first-order diffracted beams interfere with each other. Due to this interference, the Fourier image of the grating of the region 71 is projected on the grating of the region 72. A shading pitch of the Fourier image is equal to the pitch P of the grating of the region 71. As described above, the Fourier image is bent along a curved surface of the region 72. This does not influence an accuracy of measurement so much.

Supposing that the rotary body 63 rotates, as illustrated in FIG. 29, in an arrowed direction 100 (CCW direction: counterclockwise direction). The Fourier image shifts in an opposite direction (CW direction: clockwise direction) to the arrow 100. At this time, the grating of the region 72, on which the Fourier image is projected, shifts in the arrowed direction 100. Hence, a relative angular variation between the Fourier image and the grating of the region 72 is $2\theta$ when the rotary body 63 rotates through an angle $\theta$. A rotation angle can be measured with a resolving power that is twice the grating pitch.

The grating of the region 72 is illuminated with the Fourier image of the grating of the region 71. The beam reflected by the grating of the region 72 is incident on the light receiving surface 80 (not shown in FIG. 29) of the photoelectric converting element 64. The photoelectric converting element 64 converts the received beam into an electric signal. Based on this signal, the rotation angle of the rotary body 63 is measured. In the rotary encoder in this embodiment, as explained earlier, when the rotary body 63 rotates through the angle $\theta$, the Fourier image of the grating of the region 71 and the grating of the region 72 relatively rotate through an angle $2\theta$. For this reason, if the total number of the slits 70a of the rotary body 63 is n, (2n)-pieces of sine wave pulses are outputted from the photoelectric converting element 64 per rotation of the rotary body 63. The rotation angle is measured by sequentially counting the sine wave pulses. A rotating speed of the rotary body 63 can be detected based on the sine wave pulses from the photoelectric converting element 64.

As described above, there is no necessity for incorporating the image forming optical system into the cylindrical rotary body 63. The rotary body can be miniaturized, correspondingly.

FIG. 30 is a system block diagram of a driving system using the encoder, showing an application example of the encoder. An encoder unit 111 is connected to a movement unit of a body to be driven or a driving output unit of a driving means 114 including a driving source such as a motor, an actuator and an internal combustion engine. With this arrangement, there are detected driving conditions such as a rotation quantity and rotating speed, or a moving quantity and moving speed. The encoder unit 111 is constructed in the manner shown in FIG. 1. A detection output from the encoder unit 111 is conceived as an output, i.e., a counter output, of the result of counting the pulses by an unillustrated known counter provided in the encoder unit 111. An instruction signal is transmitted from an instruction means 113 to a control means. The instruction means 113 may be a known control panel (e.g., a keyboard) by which the operator is capable of directly controlling the driving condition of the driving means. Alternatively, the instruction means 113 may be a memory means for automatically transmitting a control signal on the basis of set conditions recorded. The control means 112 compares an output of the counter incorporated into the encoder unit 111 with the instruction signal. The control means 112 transmits a driving signal to the driving means 114 to obtain an instructed rotation angle (or a rotating speed). Such a feedback system is constructed, thereby making it possible to keep the driving condition instructed by the instruction means 113 without undergoing influences from outside. This type of driving system is applicable to, e.g., machine tools, manufacturing machines, industrial robots, measuring instruments and recording devices. The driving system is not limited to these device but is applicable more widely to general devices having the driving means.

The driving system is, as illustrated in FIG. 30, incorporated also into an embodiment which will be described with reference to FIGS. 5 to 11.

FIG. 31A is a sectional view depicting a state of a connecting unit between the driving means 114 and the encoder unit 111 shown in FIG. 30. In FIG. 31A, the symbol 63a denotes a fitting member provided integrally with a bottom surface of the cylindrical rotary body 63. A rotary shaft 114a serves as a moving unit of a body to be driven or a driving output unit of the driving means. A semiconductor laser 61, a photoelectric converting element 64 and half-mirrors 66, 67 are integrally fixedly disposed as components of a unit U provided in a fixed position. The unit U defined as a detecting head and the cylindrical rotary body are configures separately. In this embodiment, the fitting unit provided integrally with the bottom part of the rotary body 63 is fitted to the rotary shaft, thus effecting the connection therebetween.

The cylindrical grating unit in this embodiment includes the shaft fitting member fitted directly to the rotary shaft the rotation of which is detected. The shaft fitting member can be integrally formed by plastic molding, for instance, injection molding or compression molding. It is therefore possible to secure a high concentricity between the grating surface serving as gradations for detecting the rotation and the fitting portion and also a high fitting accuracy between the shaft and the fitting portion. A rotation detecting accuracy can be thereby enhanced. As a matter of course, the mounting members are unnecessary. The space can easily be saved, and the costs can be also reduced.

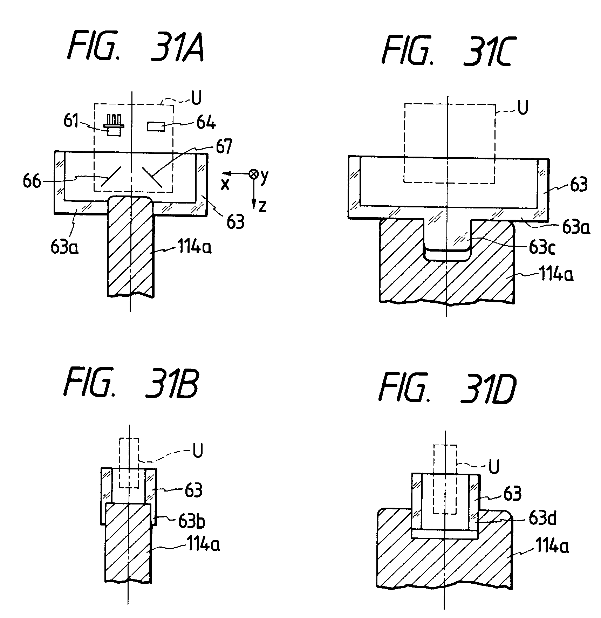

FIGS. 31B, 31C and 31D are sectional views each showing a state of connecting portion between the driving means 114 and the encoder unit 111 in the embodiment shown in FIGS. 5 to 7 according to the present invention. The same components as those in the embodiments discussed above are marked with the like symbols. Other configurations, operations and principles of the embodiment of FIGS. 5 through 7 are the same as those of the fourth embodiment, and the description thereof is omitted.

In a fifth embodiment of FIG. 31B, a fitting recess is formed in the internal surface of the rotary body 63. In a sixth embodiment of FIG. 31C, a fitting protrusion is provided on a fitting portion 63a of the rotary body 63. Fitting is thus effected. In a seventh embodiment of FIG. 31D, a portion 63d on the external surface of the rotary body 63 serves as a fitting portion intactly. In any case, the fitting portions are formed integrally with the rotary body. The same effects explained in the fourth embodiment are exhibited.

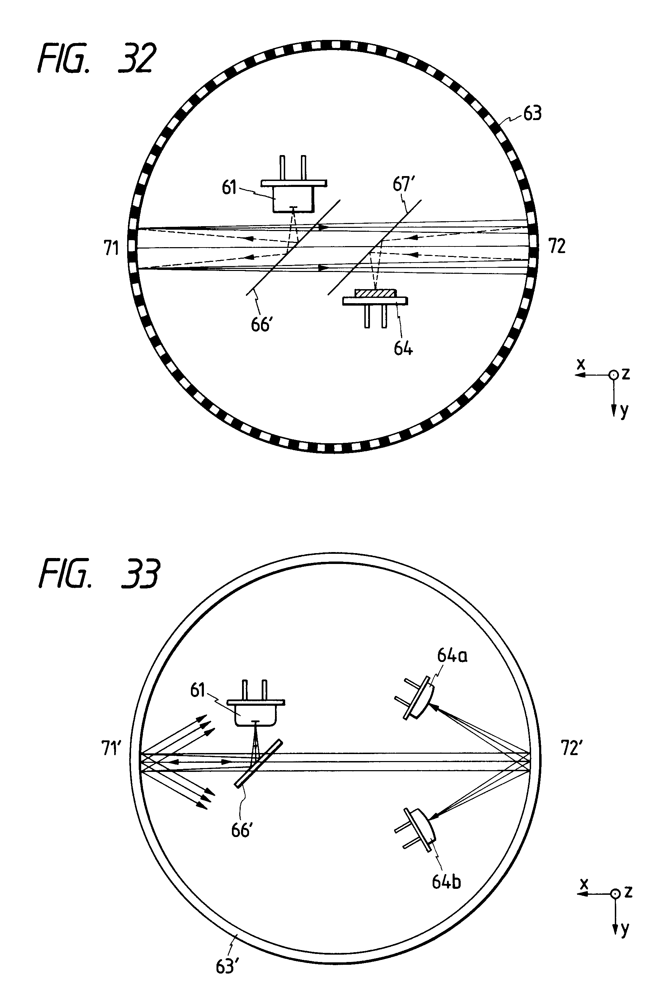

FIG. 32 is a top view showing an eighth embodiment of this invention. The measuring principle and operation of the eighth embodiment are the same as those of the fourth embodiment, and the description thereof is omitted. The explanation will be given with reference to only the top view similar to FIG. 29. The following is a description of one different arrangement of the eighth embodiment from the fourth embodiment. The semiconductor laser 61 emits the beams from a direction y. A half-mirror 66' reflects the beam in a direction x. A half-mirror 67' reflects the reflected beams from the region 72 in a direction y. This arrangement is practicable. Other difference is that no collimator lens system 62 is prepared. In this case, the placement is performed so that a distance (length of a light path) leading from a light emitting point of the semiconductor laser 61 via the half-mirror 66' to a reflection surface of the region 71 is substantially one-half of a radius of curvature of a reflection surface of the rotary body 63. With this arrangement, the reflected beams from the region 71 become substantially parallel beam within the x-y plane. The reflected beams from the region 71, however, do not become the parallel beams in the direction perpendicular to the sheet surface (within the Y-Z plane). Consequently, the beams incident on the photoelectric converting element 64 via the half-mirror 67' after being reflected by the region 72 decrease in light quantity in proportion to the divergence within the y-z plane as compared with the fourth embodiment. Besides, the contrast of the Fourier image on the region 72 degrades. A large proportion of influences by these phenomena can be eliminated by reducing a divergent angle of the semiconductor laser 61 or decreasing the light path to the element 64.

A ninth embodiment of this invention will be explained referring to FIG. 33. The ninth embodiment has the following arrangement different from the eighth embodiment. A cylindrical grating unit furrowed with reflective V-shaped grooves, which will be mentioned later, is provided on a cylindrical rotary body 63'. No half-mirror 67' is prepared herein. Furthermore, the two beams emerging obliquely from a region 72' are received by two photoelectric converting elements 64a, 64b, thereby obtaining 2-phase sine wave pulse outputs assuming different phases.

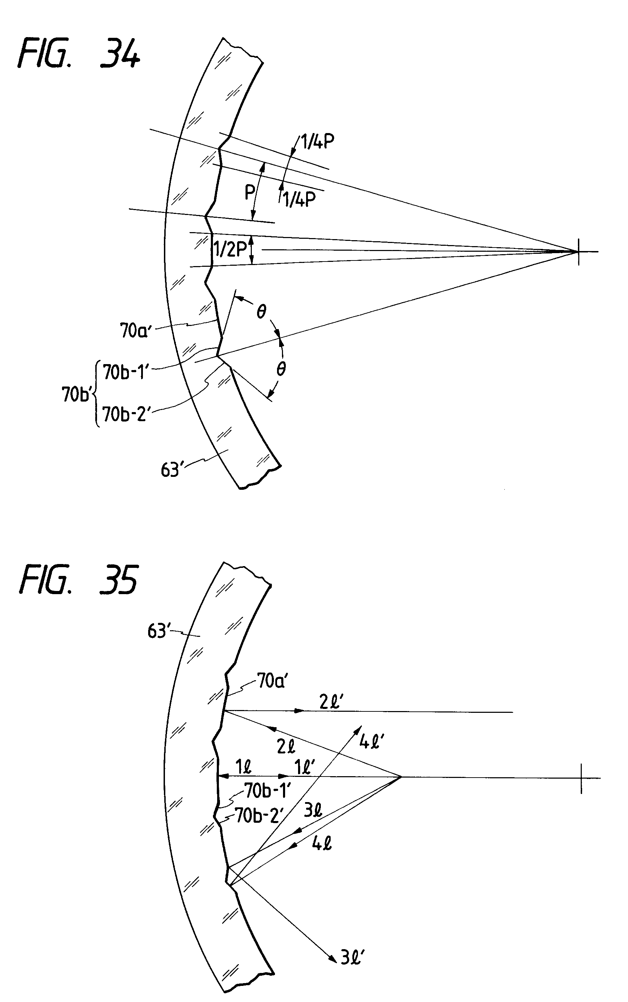

The cylindrical grating unit with the reflective V-shaped grooves will be explained in detail. FIG. 34 is an explanatory view showing the grating unit.

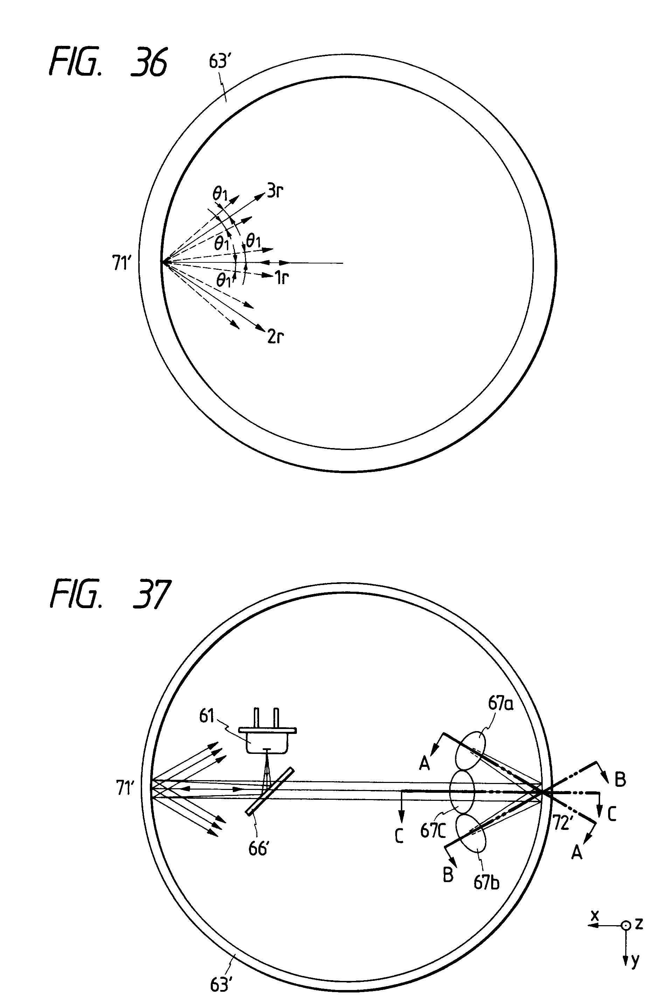

FIGS. 35 and 36 are views of assistance in explaining the light beam action of the gratings.

The symbol 70a' represents a flat reflecting portion formed between the V-shaped grooves (hereinafter referred to as a V-groove); and 70b' denotes a V-groove portion. Two flat reflecting portions 70b-1' and 70b-2' cooperate to form the V-groove 70b'.

n-pieces of V-grooves 70b' are arranged at equal spacings at pitches P (rad) in the peripheral direction along the internal side surface of the rotary body 63' (nP = $2\pi$rad). A width of one V-groove 70b' is set to 1/2 P (rad). Each of the two flat reflecting portions 70b-1' and 70b-2' which form one V-groove has a width equivalent to 1/4 P(rad). Each oblique surface has a value $\theta$ which falls within a range of $45 < \theta < 90$ (deg) with respect to the plane formed by connecting a V-groove bottom angular part to the central axis of the cylinder. In this embodiment, $\theta = 75$ (deg).

The optical action of the V-groove reflection grating unit of this invention will be explained referring to FIG. 35.

Provided within the cylinder is a point light source 0 (which herein indicates a position equivalent to a divergent origin of the semiconductor laser 61 when the half-mirror 66' is not prepared). FIG. 35 shows a beam follow-up result when the beams from the point light source 0 are incident on the reflection surfaces 70a', 70b-1' and 70b-2'. Beams $1\ell - 4\ell$ are reflected as indicated by $1\ell' - 4\ell'$. As can be understood from FIG. 35, the beam reflected by the flat reflecting portion 70a' travels as a beam substantially parallel to the radial direction of the cylinder. The beams reflected by the flat reflecting portions 70b-1' and 70b-2' travel in other directions. Now turning to FIG. 36, the light beam action of FIG. 35 will be described in association with the whole region 71' irradiated with the beams. Considering a relation in reflection angle between the respective surfaces 70a', 70b-1' and 70b-2' and a diffractive effect within the region 71', positive reflected beams (0th-order beams) from the individual surfaces are indicated by 1r, 2r and 3r. Besides, ± first-order beams (indicated by broken lines in the Figure) are generated with the beams 1r, 2r and 3r each interposed therebetween. (High-order diffraction beams, though generated, have a weak intensity enough not to cause any influence, and hence the description thereof is omitted).

The ± first-order beams and each positive reflected beam interposed therebetween cooperate to form the Fourier image. There is herein employed the Fourier image formed by the positive reflected beam 1r from the surface 70a' and the ± first-order beams between which 1r is sandwiched in.

The 0th-order beams 2r and 3r from the V-groove surfaces 70b-1' and 70b-2' and the ± first-order beams incidental thereto are superposed on the region of the 0th-order and ± first-order beams from the flat reflecting portion 70a'. This causes a noise of the Fourier image. Hence, it is required that the angle $\theta$ of the V-groove be set to prevent a crossover. The crossover is a phenomenon in which the ± first-order beams from the V-groove are superposed on the region of the ± first-order diffracted beams by the flat surface grating 70a', or alternatively the ± first-order beams approach the central 0th-order beam. An angle $\theta_1$ (unit: deg) to the central 0th-order beam between the + first-order beams is given by:

$$\sin \theta_1 = \frac{\lambda}{P}$$
$$\theta_1 = \sin^{-1} \left(\frac{\lambda}{P}\right)$$

where P is the grating pitch (unit: rad), and λ is the wavelength. To prevent the crossover, $\theta$ is required to be set such as:

$$90 - \theta > \theta_1$$

namely,

$$\theta < 90 - \sin^{-1} \left(\frac{\lambda}{P}\right)$$

(unit: deg)

To be specific, as explained before, it is desirable to take a value within a range of $45 < \theta < 90$ (deg).

Turning back to FIG. 33, the beams emitted from the light source unit 61 are incident on the cylindrical grating unit 63' through the half-mirror 66'. The incident beams, as described in FIGS. 34 to 36, travel separately in three directions. As explained before, there is used especially the Fourier image formed by the positive reflected beam (0th-order beam) from the grating portion 70a' and the ± first-order beams therefrom. In this case, the Fourier image can be formed on the second region 72' by the same action as that of the previous embodiment.

The shading grating image formed on the second region 72' is reflected by the grating portion of the second region. At this moment, the shading grating image is incident selectively on the reflection surfaces 70a', 70b-1' and 70b-2' with the rotations of the grating unit. The reflection surfaces 70b-1' and 70b-2' are disposed such that the centers deviate from each other by 1/4 pitch, i.e., P/4. The positive reflected beam from 70b-1' is received by a photodetector 64a, while the positive reflected beam from 70b-2' is received by a photodetector 64b. Two sine wave pulses showing a phase difference of 90° with respect to each other are thereby obtained.

A rotational direction is detected from the two sine wave pulse signals exhibiting the phase difference of 90°. Count pulses for 1/4 pitch of the sine wave can be obtained. Count outputs to which the rotational direction is added are obtained by a known counter unit with the aid of the count pulses and the rotational direction detected. A method of and a device for performing this operation are well known, and hence the description thereof is omitted herein. Specifically, 500 V-grooves are furrowed inwardly of the cylinder having a diameter of 5 mm. 4000 count pulses are obtained per revolution by use of this device.

In accordance with this embodiment, the cylindrical grating unit is formed not with the slits but with the V-shaped grooves. Therefore, the mass-production is attainable by suitable processing methods such as plastic injection molding or compression molding (the reflection surfaces are coated with reflective films as the case may be). The costs can be readily reduced as compared with the conventional processing methods based on the photolitho process.

As set by the above-mentioned method, the following advantage is acquired. The two sine wave pulse signals having the phase difference with respect to each other can be easily surely obtained (because of a greater amount of detected light than in the case of employing the ordinary diffraction grating).

The foregoing two reflected beams from the region 72' may be deflected in a direction Z by means of mirrors, respectively.

FIG. 37 is a top view showing a tenth embodiment of the invention. In this embodiment, as depicted in the Figure, the reflected beams from the flat reflecting

FIG. 37 is a top view showing a tenth embodiment of the invention. In this embodiment, as depicted in the reflected beams from the flat reflecting portion 70a' of the region 72' are also reflected in the direction Z by use of a half-mirror 67c. These three reflected beams are respectively detected, thereby obtaining 3-phase sine wave pulse signals assuming different phases. This arrangement is different from the ninth embodiment.

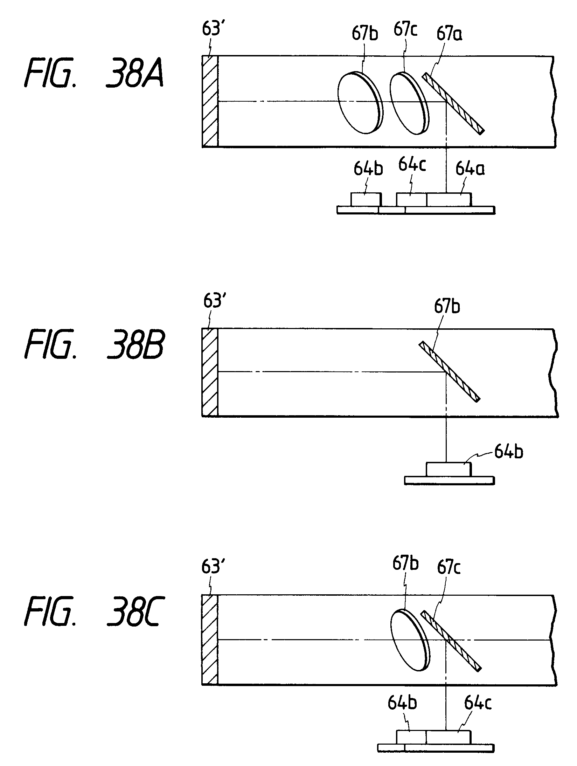

FIGS. 38A, 38B and 38C are sectional views taken substantially along the lines A-A, B-B and C-C of FIG. 37. The reflected beams from the flat reflecting portions 70b-1', 70b-2' and 70a' are detected by photoelectric converting elements 64a, 64b and 64c.

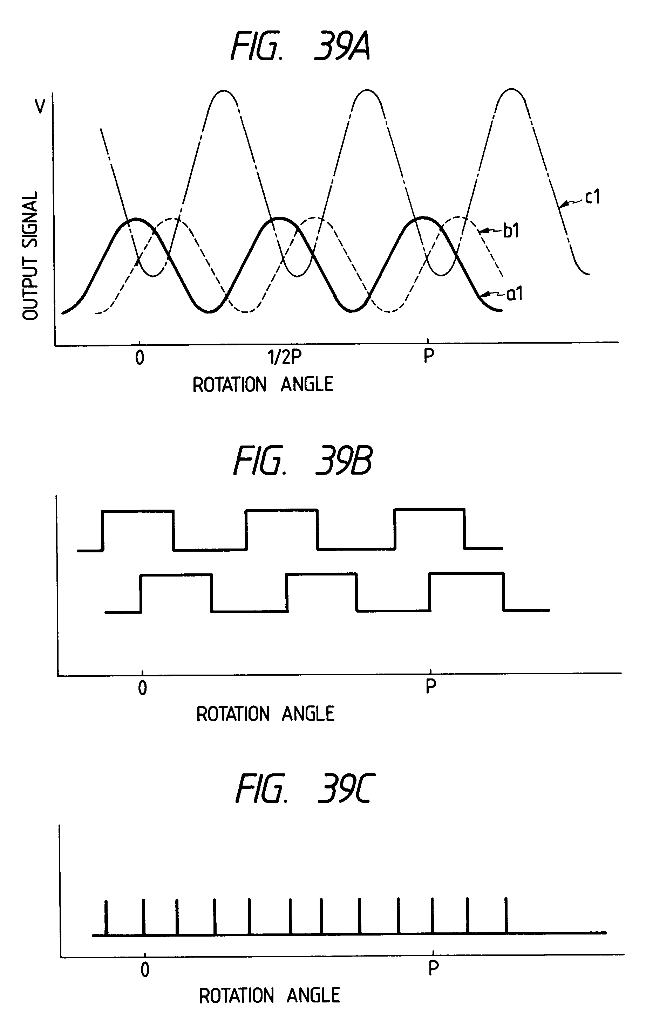

This embodiment will hereinafter be explained. Based on the construction discussed above, the waveforms of the output signals are exemplified by FIG. 39A.

When rotating in the CCW direction:
the output waveform of the photoelectric converting element 64a is a1 (b1 when rotating in the CW

14

direction);

the output waveform of 64b is b1 (a1 when CW); and

the output waveform of 64c is c1 (also c1 when CW).

In this embodiment, when the grating unit rotates through P (rad), there appears an output sine waveform of two periods. Especially in this case, a phase difference between the output waveforms a1 and b1 is 90°. For this reason, the output signals a1 and b1 are used and changed in rectangular waveforms depicted in FIG. 39B through a known comparator circuit. Pulse signals shown in FIG. 39C are obtained at the rise and fall points of the respective rectangular waveforms. Eventually, 8 pulses can be acquired at the rotation angle of P (rad). Hence, it is assumed that the number of gratings provided in the rotational directions of the hollow body is set to n, (8 x n)-pieces (pulse/one rotation) of rotation angle signals can be detected.

FIG. 39 illustrates the output waveforms of the V-groove cylindrical grating unit assuming the configuration of FIG, 34. In this case, the V-groove width is not ideally 1/2 P but becomes slightly narrower or wider such as 6/10 P or 4/10 P. If the V-grooves having these widths are formed over the periphery, the phase difference between the output signals a1 and b1 is not exactly 90°. The value deviates somewhat from 90°. This degrades the accuracy when causing an error in the pulse interval in the case of being pulsed finally.

A method of correcting the slight deviation of the phase difference on the circuit will be described.

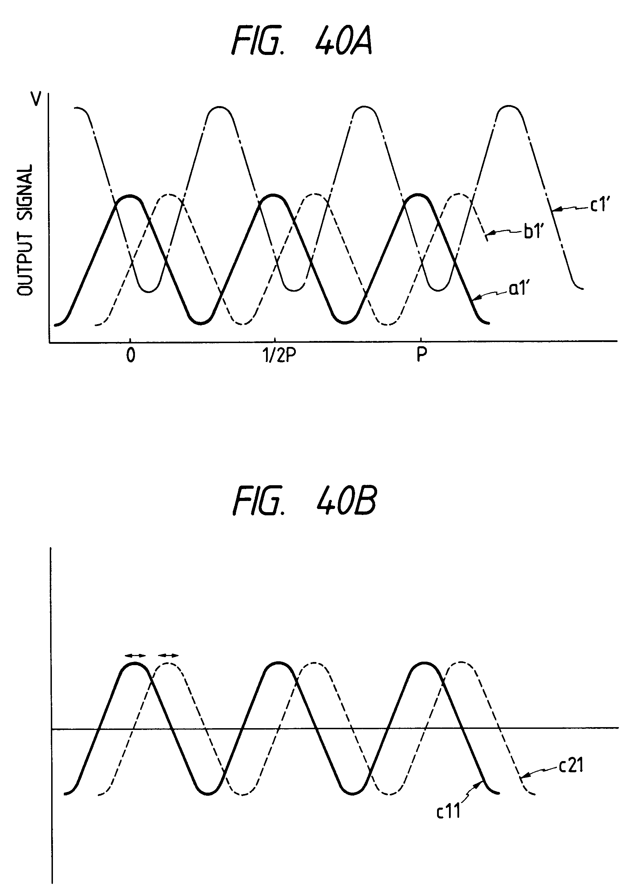

Now supposing that the V-grooves each having a width wider than 1/2 P are furrowed over the entire periphery of the cylinder, the phase difference between outputs a1' and b1' of the elements 64a and 64b is greater than 90°. FIG. 40A shows the waveforms indicated by a1' and b1' at that time.

A differential output signal C11 between the outputs a1 and c1 is created by adjusting amplitude gains of these outputs. Similarly, a differential output signal C21 between the outputs b1 and c1 is created by adjusting the amplitude gains of these outputs. A phase difference between the signals C11 and C21 is changeable to an arbitrary value lower than the phase difference between a1' and b1', depending on a degree of adjustment of the amplitude gains at that time. Therefore, the amplitude gains are adjusted in accordance with the V-groove width larger than designed, whereby the phase difference can be constantly precisely adjusted to 90°.

The phase difference between the signals C1 and C2 as a differential output between a signal c1' and signals a1', b1' can not be set larger than the phase difference between the original signals a1' and b1'. Therefore, the V-groove is formed beforehand in a relatively large size. With this arrangement, the phase difference becomes greater than 90° when causing an error in the phase difference. If the error is produced, the amplitude gains are adjusted to reduce a phase difference between differential outputs C11 and C21 under the phase difference between the outputs a1' and b1' by an amount of the error.

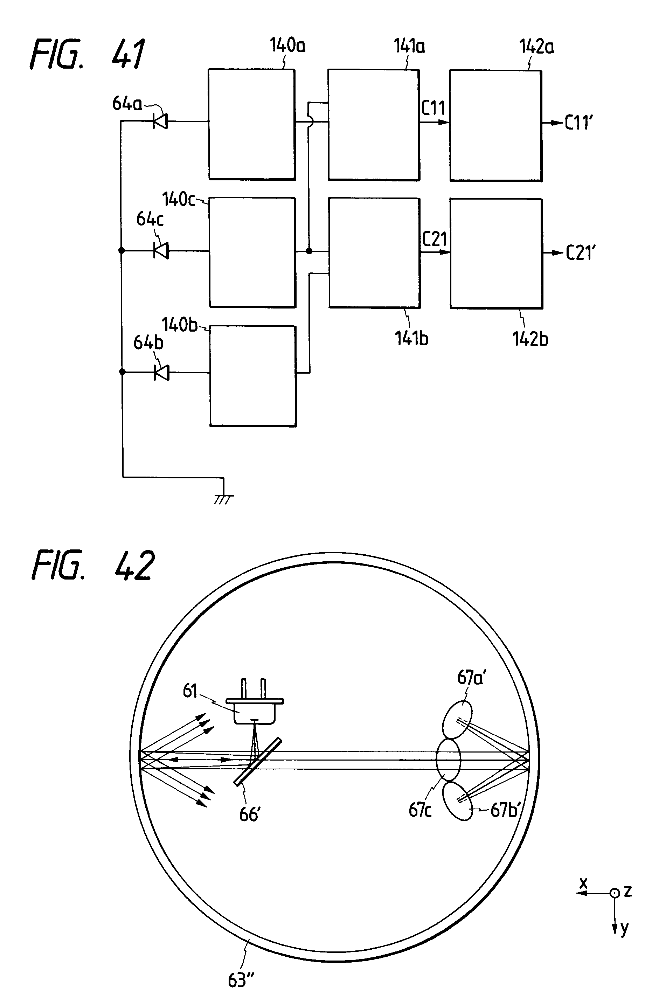

FIG. 41 is a block diagram depicting the circuitry for generating the above-mentioned differential outputs in the device of this invention. Designated at 140a, 140b and 140c are amplitude gain adjusting circuits for adjusting the amplitude gains of the output signals from the photoelectric converting elements 64a, 64b and 64c. Indicated at 141a and 141b are differential amplifiers for generating differential outputs between the outputs of the amplitude gain adjusting circuits 140a and 140b and the output of the amplitude gain adjusting circuit 140c. Comparators 142a and 142b convert the outputs C11 and C21 of the differential amplifiers 141a and 141b into binary-coded pulse signals (marked with C11' and C21') shown in FIG. 39B. The outputs C11 and C21 are converted into count pulse signals (FIG. 39C) having a smaller period by a known method. The description of operations given above is omitted.

The phase difference may be adjusted to 90° by adjusting the amplitude gains of the signals a1', b1' and c1' in the amplitude gain adjusting circuit, while the operator confirms the waveforms of C11 and C21 by use of an oscilloscope or the like. If the V-groove is formed smaller than designed, an adder may be used in place of the differential amplifiers 141a and 141b.

In accordance with this embodiment, as discussed above, the 3-phase signals are taken. By employing one of these signals, the phase difference between other two signals are adjusted. Even if an error is caused in manufacturing the gratings, the error can be corrected. The rotations can be detected more accurately.

FIG. 42 is a top view showing an eleventh embodiment of this invention. In this embodiment, a cylindrical rotary body including a grating unit different from that in the tenth embodiment. Instead of the mirrors 67a and 67b, half-mirrors 67a' and 67b' having the same reflectance as that of the half-mirror 67c are employed. The output signals from the elements 64a, 64b and 64c undergo a different process from the tenth embodiment. Excepting the above, other configurations are the same as those in the tenth embodiment. The explanation of the same configurations is omitted.

EP 0 439 804 B1

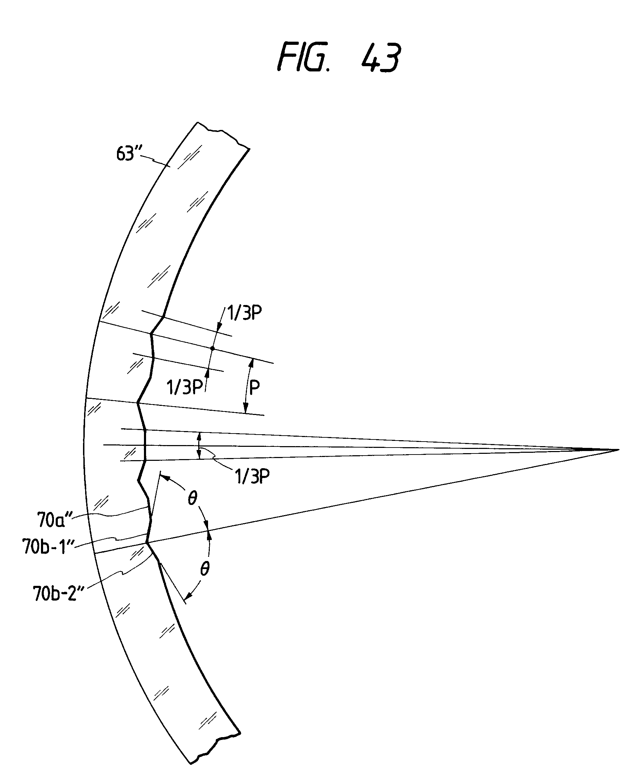

FIG. 43 is a view of assistance in explaining a form of a grating unit of a cylindrical rotary body 63" in the same device. This type of rotary body has the following different arrangement from that shown in FIG. 34. A V-groove width is changed from 1/2 P given above to 2/3 P. A width of a flat surface 70a" between the V-grooves is set to 1/3 P. Widths of flat surfaces 70b-1" and 70b-2" which form the V-groove are set respectively to 1/3 P.

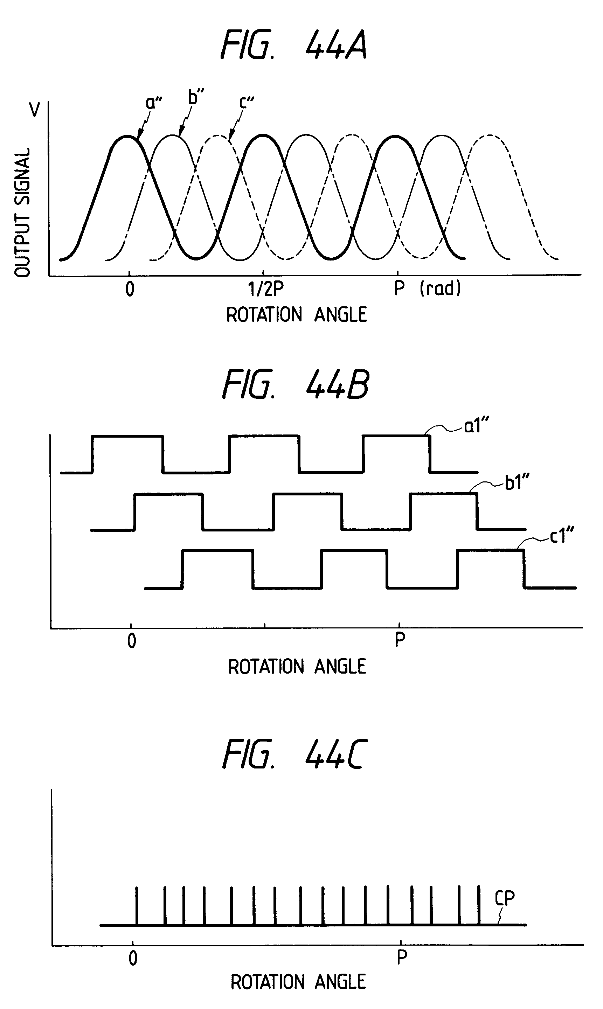

In the thus configured grating unit, FIG. 44A shows an example of waveforms of output signals a", b" and c" of the respective elements when the beams are, as in the way with the tenth embodiment, received by the elements 64a, 64b and 64c.

In this case, output signal amplitudes of the outputs a", b" and c" are substantially the same. Besides, an inter-2-phase relation exhibits a delay or advancement of approximately 120°. These 3-phase signals are subjected to rectangular waveform processing through the individual comparators, thus creating rectangular pulse signals (FIG. 44B). As illustrated in FIG. 44C, the pulse signals are generated at the rise and fall points of the rectangular pulse signals. A pulsing process is thus performed. When the cylindrical grating unit rotates through only P (rad), 12 pulses are obtained.

Hence, when the total number of gratings is set to n, (12 x n)-pieces (pulse/one rotation) of rotation angle signals are acquired.

Owing to the grating configuration (FIG. 43) of the cylindrical grating unit of this invention, the count pulses are incremented by utilizing all three pieces of 3-phase signals. A resolving power can be thereby increased.

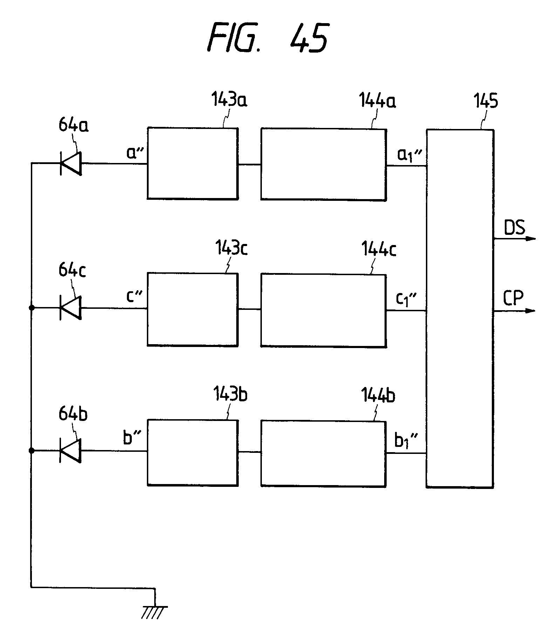

FIG. 45 is a block diagram depicting a circuit for executing the above-described process. Amplitude amplifying circuits 143a, 143b and 143c amplify the amplitudes of the outputs a", b" and c" from the respective elements. Comparators 144a, 144b and 144c output the output signals from the amplitude amplifying circuits 143a, 143b and 143c in the form of rectangular pulse signals as in the case of outputs a1", a2" and a3" of FIG. 44B. Designated at 145 is a pulse generating circuit for generating count pulse signals CP shown in FIG. 44c by generating the pulses at the first and last transitions of the outputs a1", a2" and a3" from the respective comparators. The pulse generating circuit 145 also discerns the directions and output directional signals DS. The signals CP to which the directional signals DS are added are counted by a known counter, thereby detecting a rotation quantity of the rotary body 63".

As mentioned earlier, when using the 3-phase output signal, it is possible to obtain the 6-fold frequency pulse signal having a higher resolving power than that of the pulse signal having a frequency that is four times as high as the sine wave pulse signal based on the conventional 2-phase output signal.

In accordance with the fourth through eleventh embodiments discussed above, the cylindrical rotary body conceived as a hollow body rotates. While the light source and the photoelectric converting elements i.e., the unit U are fixed. The rotating and fixed sides may, however, be reversed. In the respective embodiments, the rotary body is connected to the rotary shaft by any one of methods shown in FIGS. 31A - 31B.

In the respective embodiments, as in the fourth embodiment, the collimator lens may be provided as the necessity arises.

The hollow body is not limited to the cylindrical shape. There may be adopted arbitrary configurations capable of attaining the principle of this invention. The V-groove may assume an asymmetric V-shape or other configurations. For instance, V-shaped projection is usable.

In accordance with the fourth through eleventh embodiments, there is no necessity for incorporating the image forming optical system into the hollow body. This facilitates both the miniaturization and manufacturing of the hollow body.

In accordance with an embodiment which will hereinafter be explained, a rotary encoder comprises a light irradiation means, a cylindrical optical scale and a light receiving means. The rotary encoder detects a rotating condition of the scale by irradiating a first region on a scale side surface with beams from the light irradiation means, projecting a Fourier image of a grating of the first region on a grating of a second region different from the first region and receiving the beam traveling through the grating of the second region by the light receiving means. In the thus constructed rotary encoder, a member having a refractive index larger than the air is disposed in a light path provided inwardly of the cylindrical scale. With this arrangement, the Fourier image exhibiting a high contrast can be projected on the second region.

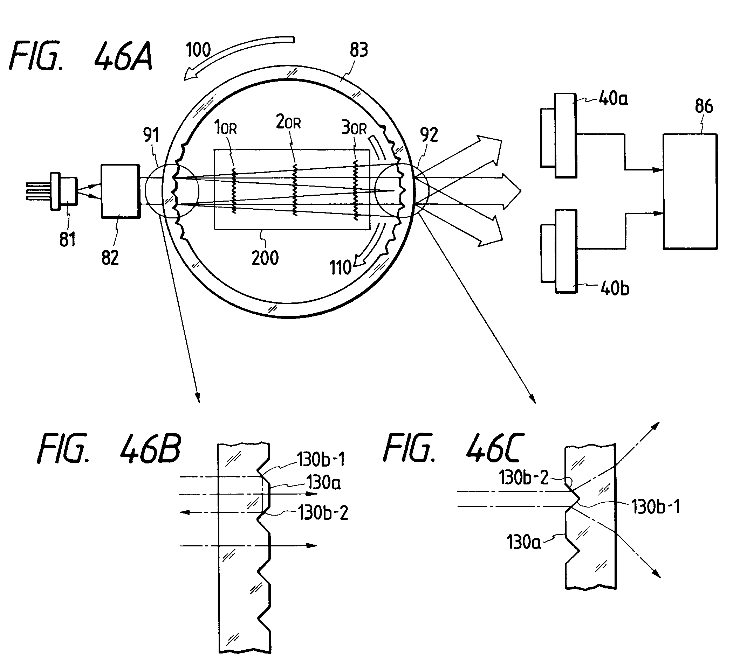

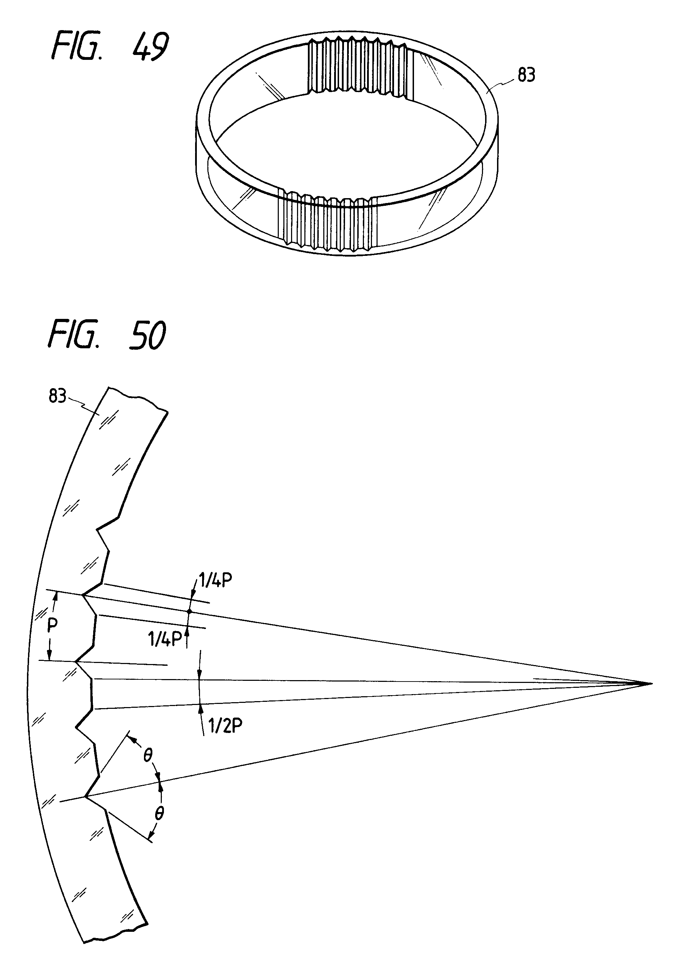

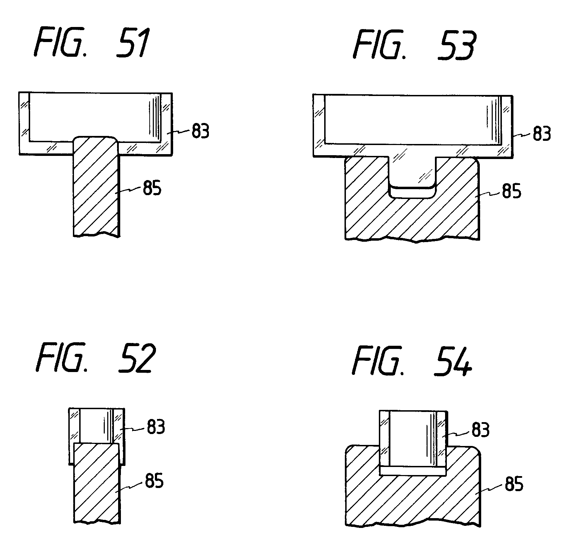

A detailed description will be given in conjunction with the accompanying drawings. FIG. 46A is a block diagram showing a twelfth embodiment. Referring to FIG. 46A, the numeral 81 designates a semiconductor laser for generating a coherent beam having a wavelength λ (= 780 nm). A collimator lens system generally indicated at 82 serves to collimate divergent beams emerging from the semiconductor laser 81 into substantially parallel beams. The semiconductor laser 81 and the collimator lens system 82 are combined to constitute a light irradiation means. A rotary optical scale 83 including a grating unit rotates in

16

any one of arrowed directions. FIG. 49 is a perspective view depicting the scale 83. The scale 83 is composed of an optical material exhibiting a transmission property; and at least the grating unit thereof has the transmission property. Furrowed in the internal side surface of the cylindrical scale 83 are a multiplicity of V-shaped grooves arranged over the entire periphery in the peripheral direction. The grating unit is thus formed. Referring back to FIG. 46, a glass plate 200 intervenes in a light path inwardly of the scale 83. Photodetectors 40a and 40b serving as a light receiving means are disposed in positions confronting the light irradiation means, with the scale 83 interposed therebetween. Outputs of the respective photodetectors are connected to a signal processing circuit 86. The signal processing circuit 86 includes a pulse count circuit, a circuit for discerning the rotational direction and a signal interpolation processing circuit. The scale 83 is connected to a rotary driving shaft of a motor or the like. The scale 83 is employed as an optical scale for detecting a rotation quantity of the driving shaft. FIGS. 51 through 54 illustrate some variations of a method of mounting the scale 83. In any variation, the scale 83 is fitted directly to the rotary driving shaft 85. With this arrangement, it is possible to keep high both a fitting accuracy and a concentricity between the fitting portion and the grating surface serving as gradations for detecting the rotations.

FIG. 50 is a view illustrating in detail the grating unit of the scale 83. The V-shaped grooves and the flat portions are alternately arranged, thus forming gratings. (n)-pieces of V-shaped grooves are furrowed in the cylindrical internal side surface at pitches P (rad) (n x P = $2\pi$rad) in the peripheral direction. A width of the V-shaped groove is 1/2 P (rad). Each of the two flat surfaces for forming the v-shaped groove has a width of 1/4 P (rad). Each oblique surface is inclined at an angle greater than a critical angle i.e., $\theta$ = 45* in this embodiment with respect to a straight line which connects the center to the bottom of the V-shaped groove.

A spacing d (an inside diameter of the scale) along the optical axis between gratings of first and second regions 91 and 92 of the scale 83 is set to satisfy the following relation:

$$d = N \cdot p^2 / \lambda \ (N = 4)$$
$$P = \pi d / n \text{ (n is the total number of slits)}$$

where P is the grating pitch, and $\lambda$ is the wavelength in this embodiment. The diameter d of the scale 83 is thus set. It is therefore possible to project an image of the grating of the first region 91 of the side surface of the scale 83 directly on the grating of the second region 92. In this case, there is no necessity for incorporating an image forming optical system into the hollow portion of the scale 83. The grating image projected thereon is, as mentioned before, referred to as the Fourier image. The grating image is formed by the self-image-forming action of the grating concomitantly with the light diffractive phenomenon. The scale 83 in this embodiment assumes a cylindrical configuration and therefore has a tendency in which the contrast declines due to a slight bend of the Fourier image. There is no problem in practical use, if the light irradiation means (81, 82) and the scale 83 are constructed to satisfy the following condition:

$$(N - \tfrac{1}{4}) P^2 / \lambda < d < (N + \tfrac{1}{4}) P^2 / \lambda$$

(N is the natural number)

$$P = \pi d / n \text{ (n is the total number of slits)}$$

Note that the scale 83 is formed of plastic in this embodiment. This material is suitable for mass-production by a manufacturing method such as injection molding or compression molding. It is feasible to provide the encoder at low costs.

Based on the method in this embodiment, the Fourier image is generated resultantly by the beam action in combination with the grating portion of the first region 91. This Fourier image is formed on the grating surface of the second region 92, and a rotating condition is detected as moire. A position L of the Fourier image is expressed in the following formula. In this formula, the Fourier image has a such a characteristic that the contrast of this image declines with an increment in value of N.

$$L = N \cdot P^2 / \lambda \text{ (N is the natural number)}$$

Namely, when increasing the number of gratings for the purpose of providing high-pulsing in this method, a value of P is decreased if a diameter of the cylinder is constant. In order to form the Fourier image on the second region, a value of N has to be inevitably increased. As a result, the following problems are caused. The decline of contrast (a decrease in S/N ratio) is induced due to the above-described characteristic. The reliability is apt to decrease.

17

In this embodiment, a transmissive optical member 200 having a refractive index higher than the air (no = 1) intervenes in a light path between the first region 91 and the second region 92. In this state, the position in which the Fourier image is formed is shifted. This arrangements serves to reduce the value of N. The Fourier image having a much higher contrast can be formed on the second region 92.

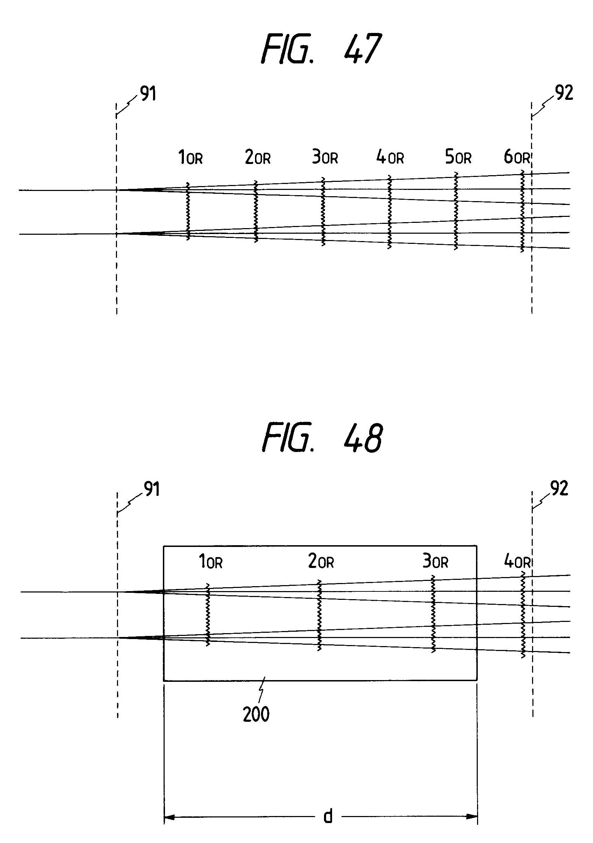

This action will be explained with reference to FIGS. 47 and 48.

FIG. 47 illustrates an example corresponding to the conventional example where nothing is disposed inside the scale. Fourier images ($1_{OR}$ - $6_{OR}$) are formed by the beams diffracted by the grating portion of the first region 91. The 6th (N = 6) Fourier image $6_{OR}$ among these images is formed on the grating portion of the second region 92.

Contrastingly, FIG. 48 shows this embodiment. The optical member 200, viz., glass (the refractive index n = 1.5 in this embodiment) having a refractive index larger than the air is interposed between the first and second regions in FIG. 47.

Typically, a plane parallel plate having a refractive index n (n > 1) intervenes in the image forming light path. In this case, an air conversion light path d' for replacing this with the air is expressed such as:

$$d' = d / n \text{ (n is the refractive index of the plane parallel plate)}$$

The calculation is effected on the presumption that an air layer defined above exists. Hence, if the refractive index n is larger than the air refractive index (no = 1), the image shifts by a difference between d and d' in such a direction as to separate far away.

A moving quantity t is given by:

$$t = d (1 - 1/n)$$

The Fourier image shifts by t in such a direction as to separate from the first region.

Referring to FIG. 47, the sixth image $6_{OR}$ is formed on the grating portion of the second region 92. In FIG. 48 associated with this embodiment, the parallel glass plate 200 having a thickness d is interposed. In consequence, the sixth image separates virtually from the grating surface. Only the 4th image $4_{OR}$ shifts by t and is formed in a position of the grating portion of the second region 92. Since the 4th image exhibiting a higher contrast than that of the 6th image is employed, the S/N ratio of the detecting signal can be further improved. This in turn makes the reliability on the detection still higher.

The measuring principle of this embodiment will next be described in greater detail with reference to FIGS. 46A through 46C.

The beams coming from the semiconductor laser 81 are converted into a convergent beam by adjusting a position of the collimator lens system 82. The convergent beam is incident on a first region 91 of the scale 83. The reason why the convergent beam is used will be elucidated. The side surface of the scale 83 has a refractive power equivalent to that of a concave lens due to a difference in curvature between the external and internal side surfaces. The beams entering the scale 83 become substantially parallel beams owing to action of the concave lens.

The convergent beam, as illustrated in FIG. 46B reaches the grating unit of the first region. Then, the convergent beams travel into the cylinder after passing through a surface 130a. The beam reaches a surface 130b-1 of the grating unit is deflected to a surface 130b-2 after undergoing full reflection as shown in the Figure. It is because the oblique surface is inclined at more than a critical angle. The beam is also fully reflected by a surface 130b-2. The beam, which reaches the surface 130b-1, is eventually returned substantially in the incident direction without traveling into the interior of the rotary body. Similarly, the beam which reaches the surface 130b-2 is returned by repeating the full reflection. Hence, the beam, which reaches a range defined by the two oblique surfaces 130b-1 and 130b-2 which form the V-shaped groove in the first region 91, is reflected without advancing into the cylinder. Only the beam which reaches the portion 130a advances into the cylinder. That is, the V-shaped groove diffraction grating in the first region 91 has the same action as that of the transmission type amplitude grating.

The beams are diffracted by the grating unit of the first region 91, whereby the diffraction beams of 0th-order, ± first-order, ± second-order,... are generated by action of the gratings. Two or three beams of the 0th-order and ± first-order beams interfere with each other. As a result of this interference, the Fourier image of the grating of the first region 91 is formed inwardly of the scale 43. The Fourier image is repeatedly formed at a basic distance L in positions of integral multiples of L. The glass plate 200 having the refractive index larger than the air is disposed inwardly of the scale 83. The 4th (N = 4) Fourier image is formed on the grating surface of the second region 92. The shading pitch of this Fourier image is equal to the grating pitch P of the first and second regions 91 and 92.

The beam is, as illustrated in FIG. 46C, substantially perpendicularly incident on the surface 130a in the second region 92. Hence, the beam penetrates straight the surface but is not incident on the photodetector. The beams, which will reach the two oblique surfaces 130b-1 and 130b-2 cooperating to form the V-shaped groove surface, are incident thereon at an incident angle of approximately 45°. Consequently, the beams are largely refracted in different directions and reach the photodetectors 40a and 40b, respectively. In the second region, the beams travel separately in the three directions. It is because there are provided totally three kinds of surfaces inclined in different directions i.e., the two oblique surfaces inclined in different directions with respect to the incident beams and the flat surface between the V-shaped grooves. These beams respectively reach the photodetectors 40a and 40b disposed corresponding to the individual surfaces. Namely, the V-shaped groove gratings function as light wavefront splitting elements in the second region 92.

As discussed above, the scale in this embodiment characteristically has the two functions. The scale functions as the amplitude type diffraction grating in the first region 91 and as the wavefront splitting elements for detecting two phases in the second region 92.

The following is an explanation of variations in light quantity detected by the photodetectors 40a and 40b when the scale 83 rotates. It is herein assumed that the scale 83 rotates counterclockwise.

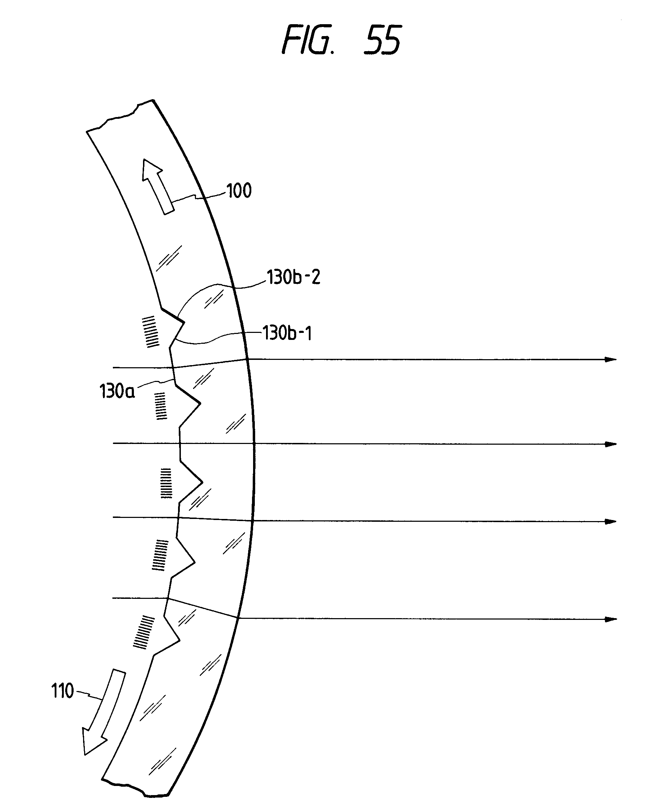

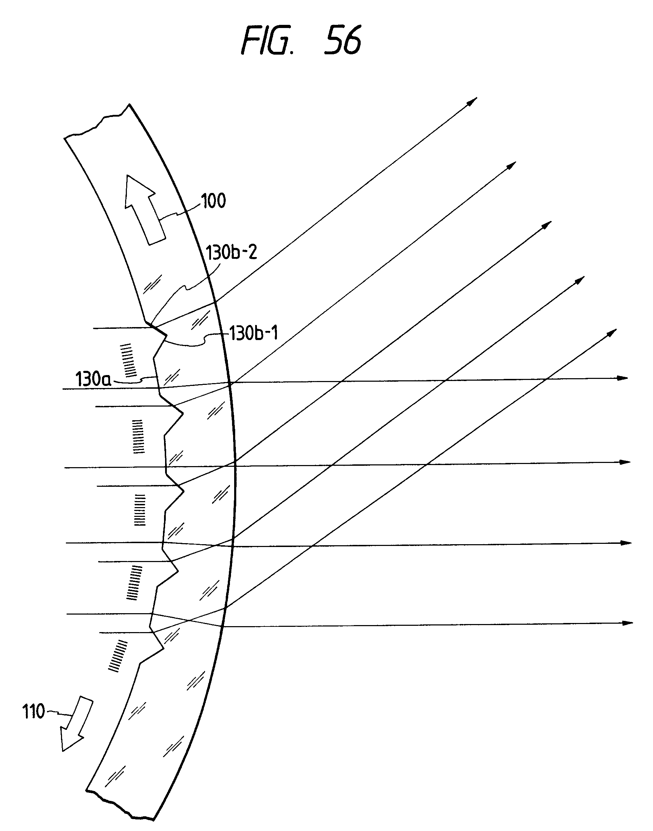

FIG. 55 depicts a situation where shading grating images having a period equal to the grating pitch P are overlapped in the second regions 92. In this case, a bright part of the shading grating image is overlapped with a portion 130a. The beams penetrate the portion 130a and travel straight. FIG. 56 shows a situation where the diffraction grating unit rotates counterclockwise (in an arrowed direction 100) through 1/8 P from a state of FIG. 55. In this case, the shading grating image moves in an arrowed direction 110. At this time, some of the beams penetrate the portion 130a, and the rest of the beams reach 130b-2. Therefore, one-half of the beams incident on the second region 52 travel straight without being incident, while the remaining half of beams are incident on the photodetector 40a.

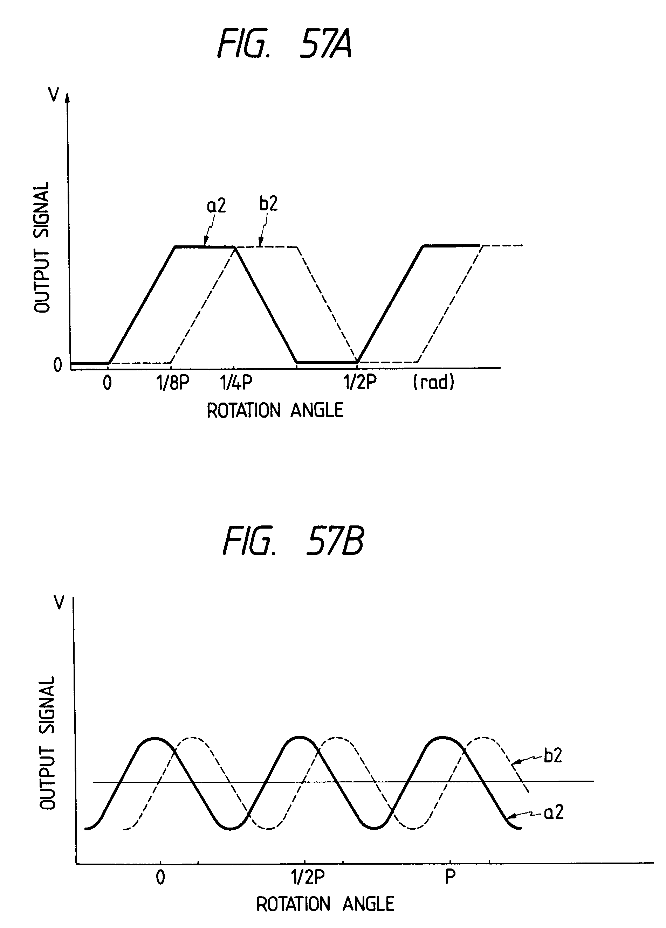

As explained above, a quantity balance of beams incident on the respective photodetectors changes corresponding to the relative displacement between the positions of grating and the Fourier image. As a result, the light quantity variations concomitant with the rotations of the grating are, as shown in FIG. 57A, obtained on the assumption that the scale 83 rotates counterclockwise. The axis of abscissa herein indicates a rotation quantity of the cylindrical grating, while the axis of ordinate indicates a light receiving quantity. Signals a2 and b2 correspond to the photodetectors 40a and 40b. Note that whereas in the clockwise rotations of the scale 83, the symbol a2 is an output of 40b, and b2 is an output of 40a The rotational directions can be discerned based on this difference. FIG. 57A illustrates theoretical variations in light quantity, wherein the contrast of the Fourier image is extremely high enough to approximate to an ideal level. As a matter of fact, however, the contrast of the Fourier image is rather low. Hence, each light quantity, as shown in FIG. 57B, changes in a substantially sine wave-like configuration.

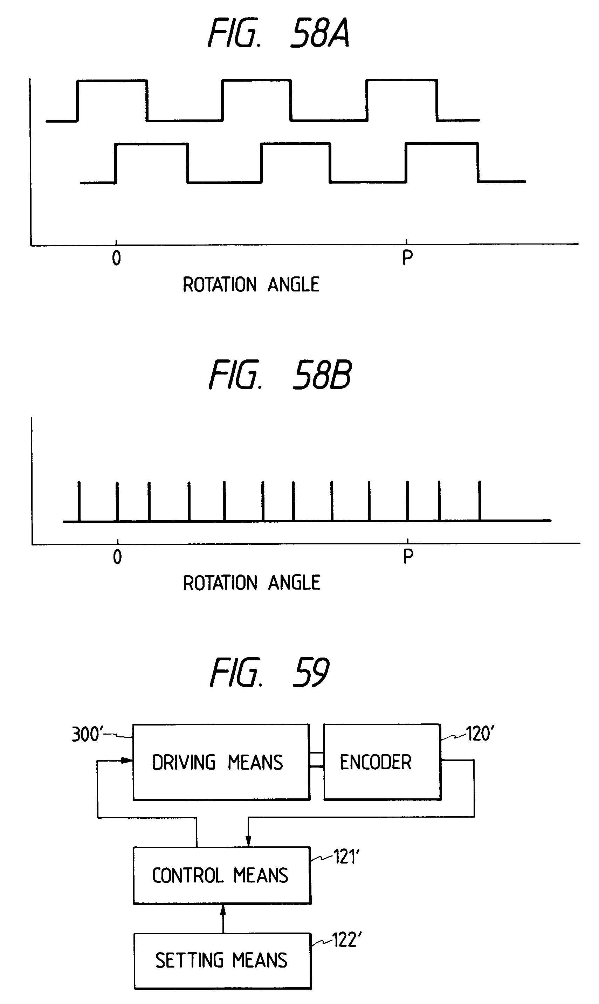

When the grating rotates through P (rad), sine wave-like output waveforms of two periods appear. A phase relation between the signals a2 and b2 shows a phase difference of 90°. These signals are changed, as illustrated in FIG. 58A, in a rectangular waveform through a comparator circuit. Pulse signals are obtained at rise and fall points of the rectangular waveforms. As shown in FIG. 58B, eight pulses can be obtained at a rotation angle of p (rad). Hence, when the number of gratings during one rotation is set to n, a rotation angle signal of 8nP/R is detectable.

Note that in the twelfth embodiment discussed above, the v-grooves are arranged at the equal spacings to form a rugged grating unit. The grating unit is not, however, limited to this rugged configuration. The grating unit is formed by arranging the rugged portions each including a surface inclined to the incident beam at the equal spacings. The scale is usable on condition that the scale has a function as the amplitude type diffraction grating and a wavefront splitting function as well.

The present invention is not limited to the rotary encoder utilizing, as in the twelfth embodiment, a so-called talbot interference. The above-mentioned member having a refractive index larger than the air may be applied to the encoder using, as shown in FIG. 1, the scale. In this case, as in the embodiment given above, there are produced effects of obtaining the high reliability and high accuracy as well.

In the twelfth embodiment, the diplophase signals are fetched by two pieces of photodetectors. If a single-phase signal may be satisfactory, it is enough to interpose only one photodetector between the photodetectors 40a and 40b in FIG. 46A. Besides, three pieces of photodetectors may be disposed to detect 3-phase signals.

The light source usable in this embodiment is not limited to the semiconductor laser as in other embodiments but may be, e.g., a point light source LED. The costs can be further reduced by using the LED more inexpensive than the semiconductor laser.

FIG. 59 is a system block diagram of a driving system including the rotary encoder, showing one example of a system using the encoder given above. A driving means 300' has driving sources such as a motor, an actuator and an internal combustion engine. The encoder 120' explained above is connected to a rotation output unit of the driving means 300', thereby detecting driving conditions such as a rotation quantity and a rotating speed. A detection output of this encoder is fed back to a control means 121'. In the control means, a driving signal is transmitted to the driving means 300' to develop a condition set by a setting means 122'. This type of feedback system is thus configured, thereby the rotational status set by the setting means can be obtained. This driving system is applicable to a variety of machine tools or manufacturing machines, measuring instruments, robots, cameras, audio devices and information devices. The driving system is not limited to these devices but is applicable more widely to the whole devices incorporating the driving means.

As discussed above, the rotary encoder in this embodiment makes use of the Fourier image exhibiting a much higher contrast. For this reason, the rotary encoder yields the effect of improving both the reliability and the accuracy. Furthermore, the cylindrical scale used therein serves to miniaturize the device and decrease the inertia. Besides, the assembly can be facilitated.

In accordance with an embodiment which will hereinafter be described, a rotation detecting instrument comprises: a light irradiation means; a rotary body including a cylindrical optical scale; and a light receiving means. Gratings are formed on the side surface of the cylindrical optical scale. A first region on the scale side surface is irradiated with the beams from the light irradiation means. The beam traveling via the grating of the first region is directed to a second region different from the first region. The beam traveling via the grating of the second region is received by the light receiving means. In this manner, rotational information of the scale is detected. The rotation detecting instrument further includes a marker element, provided at a part of the rotary body, for detecting a reference position. A rotational reference position signal of the scale is obtained by detecting the beam traveling via the marker element.

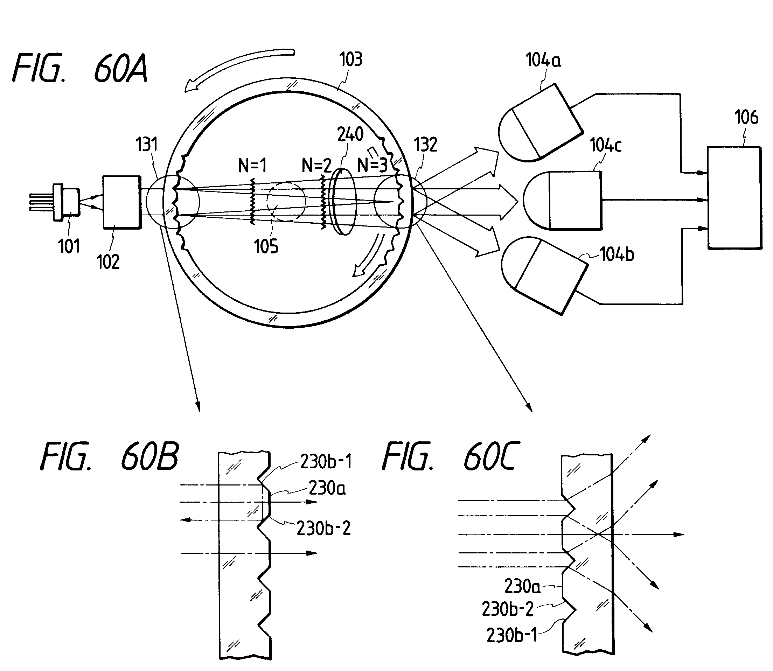

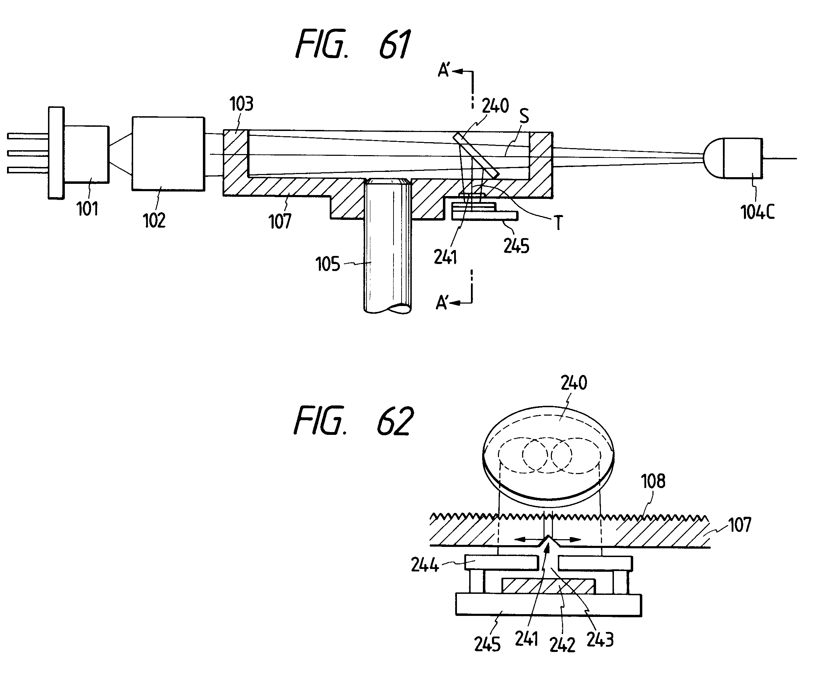

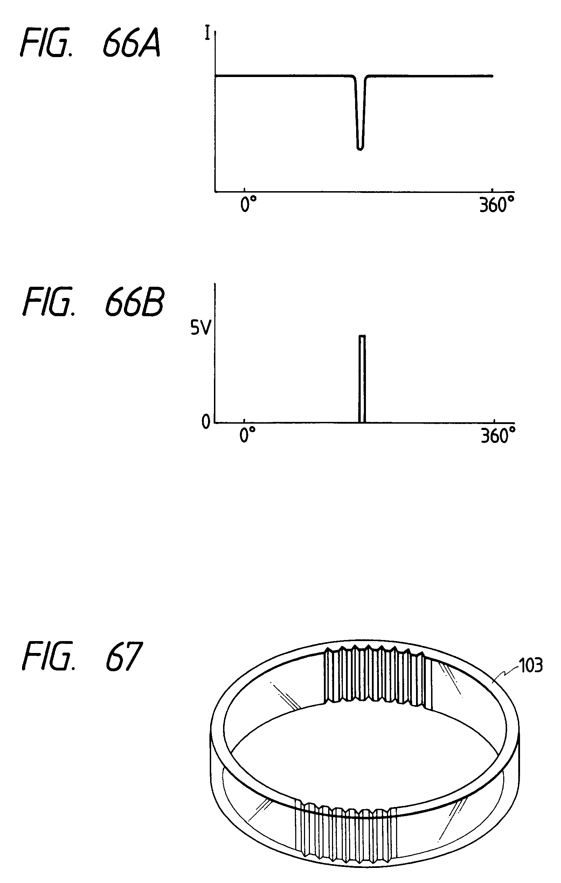

A detailed description will be given in conjunction with the accompanying drawings. FIG. 60A is a view of the rotation detecting instrument viewed from above, showing a thirteenth embodiment. FIG. 61 is a view in section. Referring to these Figures, the numeral 101 designates a semiconductor laser for generating a coherent beam having a wavelength $\lambda$ (= 780 nm). A collimator lens system generally indicated at 102 serves to collimate divergent beams emerging from the semiconductor laser 101 into substantially parallel beams. The semiconductor laser 101 and the collimator lens system 102 are combined to constitute a light irradiation means. A rotary optical scale 103 including a grating unit rotates in any one of arrowed directions. The scale 103 is connected at its bottom portion 107 to a rotary driving shaft 105 of a motor or the like. The scale 103 is used as an optical scale for detecting a rotation quantity of the driving shaft 105. FIG. 67 is a perspective view depicting the scale 103. The scale 103 is composed of an optical material exhibiting a transmission property; and at least the grating unit thereof has the transmission property. Furrowed in the internal side surface of the cylindrical scale 103 are a multiplicity of V-shaped grooves arranged over the entire periphery in the peripheral direction. The grating unit is thus formed. Referring back to FIG. 60A, the numeral 240 designates a half-mirror, intruded in an inside position of the cylindrical scale and obliquely fixed therein, for splitting a part of incident beam and reflecting downwards a part of the split beams. Photodetectors 104a, 104b and 104c serving as the light receiving means for detecting the rotational information of the scale are disposed in positions confronting the light irradiation means, with the scale 103 interposed therebetween. Outputs of the respective photodetectors are connected to a signal processing circuit 106. The signal processing circuit 106 includes a pulse count circuit, a circuit for discerning the rotational direction, a signal interpolation processing circuit and a reference position signal generating circuit. Referring to a side elevation of FIG. 61, the beams split downwards by a beam splitter 240 are directed to the marker element 241 for detecting the reference position. The marker element 241 is provided in predetermined one position of the lower surface of a bottom portion 107 of the scale during one revolution. A marker element 241 consists of an elongate V-groove portion extending in a direction orthogonal to the peripheral direction. The V-groove portion is equal to the V-groove for constituting the grating unit of the scale 103. There exists a merit of manufacturing the V-groove portion by the same method. The numeral 245 denotes a photodetector for obtaining the reference position signal by detecting the beam traveling via the marker element 241. An output signal of the photodetector is connected to, the signal processing circuit 106 to generate the reference position signal. An original position of rotation can be obtained by this reference position signal. A count value of the count circuit is reset in response to the reference position signal. In consequence, it is feasible to acquire absolute values of a rotation quantity and a rotation angle from the original position.

FIGS. 60B and 60C are views illustrating in detail the grating unit of the scale 103. The V-shaped grooves and the flat portions are alternately arranged, thus forming gratings. (n)-pieces of V-shaped grooves are furrowed in the cylindrical internal side surface at pitches P (rad) (n x P = $2\pi$rad) in the peripheral direction. A width of the V-shaped groove is 1/2 P (rad). Each of the two flat surfaces for forming the v-shaped groove has a width of 1/4 P (rad). Each oblique surface is inclined at an angle greater than a critical angle i.e., $\theta$ = 45° in this embodiment with respect to a straight line which connects the center to the bottom of the V-shaped groove.

A spacing d (an inside diameter of the scale) along the optical axis between gratings of first and second regions 131 and 132 of the scale 83 is set to satisfy the following relation:

$$d = N \cdot p^2 / \lambda \ (N = 3)$$
$$P = \pi d / n \ (n \text{ is the total number of slits})$$

where P is the grating pitch, and $\lambda$ is the wavelength in this embodiment. The diameter d of the scale 103 is thus set. It is therefore possible to project an image of the grating of the first region 131 of the side surface of the scale 103 directly on the grating of the second region 132. In this case, there is no necessity for incorporating an image forming optical system into the hollow portion of the scale 103. The grating image projected thereon is, as mentioned before, referred to as the Fourier image. The grating image is formed by the self image forming action of the grating concomitantly with the light diffractive phenomenon. The scale 103 in this embodiment assumes a cylindrical configuration and therefore has a tendency in which the contrast declines due to a slight bend of the Fourier image. There is no problem in practical use, if the light irradiation means (101, 102) and the scale 103 are constructed to satisfy the following condition:

$$(N - 1/4) P_2 / \lambda < d < (N + 1/4) P_2 / \lambda$$

(N is the natural number)

$$P = \pi d / n \ (n \text{ is the total number of slits})$$

Note that the scale 103 is formed of plastic in this embodiment. This material is suitable for mass-production by a manufacturing method such as injection molding or compression molding. It is therefore feasible to provide the encoder at lower costs than in the conventional processing method using the photolitho process.

The encoder having a construction of this embodiment is arranged in the following way. When an outside ambient temperature changes, the diameter d of the scale, the grating pitch P and the wavelength of the semiconductor laser slightly vary. As a result, there is caused a relative positional deviation between a Fourier image forming position and a grating surface position. This is probably a factor for a decrease in S/N ratio of the detecting signal. For instance, when the temperature rises, the diameter d of the scale increases. Concomitantly with this increase, a value of the grating pitch P is also incremented. Besides, the wavelength shifts to a larger wavelength side. In this case, a position L of the Fourier image changes at a ratio of $P_2/\lambda$, wherein L = N $\cdot$ $P_2 / \lambda$. A material of the scale and characteristics of the semiconductor laser are selected so that a variation quantity ($\Delta$d) of the diameter d of the scale due to changes in temperature approximates to a shift quantity ($\Delta$L) of the Fourier image to the greatest possible degree. Hence, it is feasible to reduce the relative positional deviation between the grating surface position and the Fourier image forming position. Even when causing the changes in the outside ambient temperature, a decline in the S/N ratio of the detecting signal is reduced. In the semiconductor laser having a wavelength 780 nm employed in this embodiment, a wavelength fluctuation on the order of 10 nm is caused for a temperature change of 50°C. It is preferable to adopt a scale material exhibiting a relatively large coefficient of thermal expansion. In accordance with this embodiment, the scale 103 is made of plastic (acrylic resin where n = 1.49). The coefficient of thermal expansion is greater than that of glass. Hence, there is produced such an advantage that a drop in the S/N ratio of the output signal due to the fluctuations in temperature is further reduced. The encoder can be offered at low costs. In combination with this advantage, the plastic is quite suited as a material of the encoder scale in this embodiment.

The measuring principle of this embodiment will next be described with reference to FIGS. 60A through 60C.

The beams coming from the semiconductor laser 101 are converted into a convergent beam by adjusting a position of the collimator lens system 102. The convergent beam is incident on a first region 131 of the scale 103. The reason why the convergent beam is used will be elucidated. The side surface of the scale 103 has a refractive power equivalent to that of a concave lens due to a difference in curvature between the external and internal side surfaces. The beams entering the scale 103 become substantially

21

parallel beams owing to action of the concave lens.

The convergent beam, as illustrated in FIG. 60B reaches the grating unit of the first region. Then, the convergent beam travels into the cylinder after passing through a surface 230a. The beam reaches a surface 230b-1 of the grating unit is deflected to a surface 230b-2 after undergoing full reflection as shown in the Figure. It is because the oblique surface is inclined at more than a critical angle. The beam is also fully reflected by a surface 230b-2. The beam, which reaches the surface 230b-1, is eventually returned substantially in the incident direction without traveling into the interior of the rotary body. Similarly, the beam which reaches the surface 230b-2 is returned by repeating the full reflection. Hence, the beam, which reaches a range defined by the two oblique surfaces 230b-1 and 230b-2 which form the V-shaped groove in the first region 131, is reflected without advancing into the cylinder. Only the beam which reaches the surface 230a advances into the cylinder. That is, the V-shaped groove diffraction grating in the first region 131 has the same action as that of the transmission type amplitude grating.

The beams are diffracted by the grating unit of the first region 131, whereby the diffraction beams of 0th-order, ± first-order, ± second-order,... are generated by action of the gratings. Two or three beams of the 0th-order and ± first-order beams interfere with each other. As a result of this interference, the Fourier image of the grating of the first region 131 is formed inwardly of the scale 103. The Fourier image is repeatedly formed at a basic distance L in positions of integral multiples of L. In this embodiment, the light source wavelength , the grating pitch P and the position of the collimator lens system 102 are set so that the 3rd (N = 3) Fourier image is formed on the grating surface of the second region 132. A shading pitch of this Fourier image is equal to the grating pitch P of the first and second regions 131 and 132.

The beams is branched off in two directions S and T by a half-mirror 240 which intervenes in the cylinder. The separated beams then travel forwards. The beam, which penetrates the half-mirror 240 and travels straight in the direction S, is incident on a surface 230a in the second region 132. As illustrated in FIG. 60C, the beam is substantially perpendicularly incident and hence penetrates on the straight. Then, the beam reaches a photodetector 104c. The beams reach the two oblique surfaces 230b-1 and 230b-2 serving as V-groove surfaces. These beams are incident on the surfaces at approximately 45° and therefore refracted largely in different directions, respectively. The refracted beams come to the photodetectors 104a and 104b. In the second region, the beams travel separately in the three directions. It is because there are provided totally three kinds of surfaces inclined in different directions i.e., the two oblique surfaces inclined in different directions with respect to the incident beams and the flat surface between the V-shaped grooves. These beams respectively reach the photodetectors 104a, 104b and 104c disposed corresponding to the individual surfaces. Namely, the V-shaped groove gratings function as light wavefront splitting elements in the second region 132.

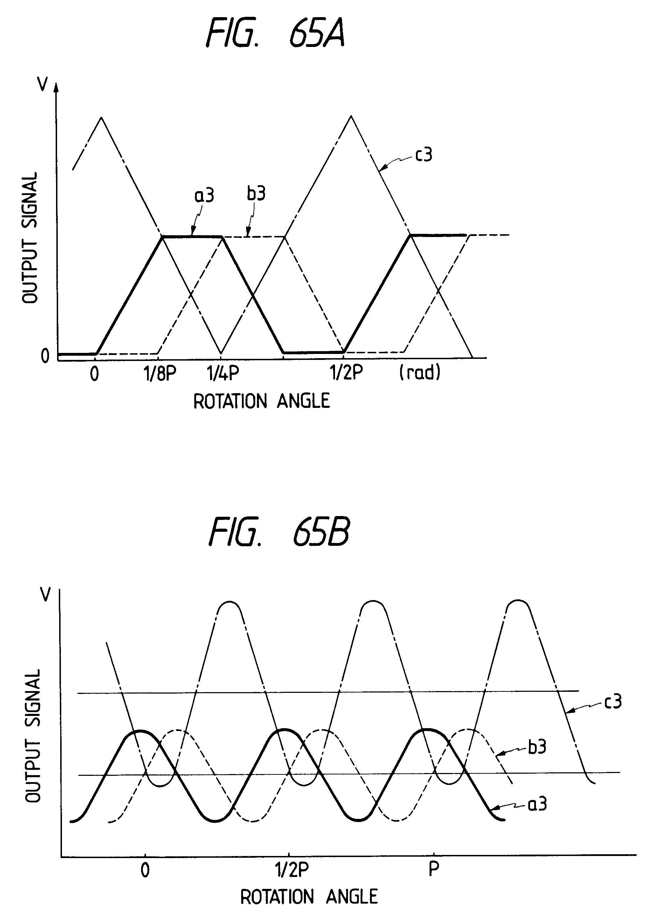

When the scale 103 rotates, it follows that the light quantities detected by the photodetectors 104a, 104b and 104c vary. A quantity balance of beams incident on the respective photodetectors changes corresponding to the relative displacement between the positions of grating and the Fourier image. As a result, the light quantity variations concomitant with the rotations of the grating are, as shown in FIG. 65A, obtained on the assumption that the scale 103 rotates counterclockwise. The axis of abscissa herein indicates a rotation quantity of the cylindrical grating, while the axis of ordinate indicates a light receiving quantity. Signals a3, b3 and c3 correspond to the photodetectors 104a, 104b and 104c. Note that whereas in the clockwise rotations of the scale 103, the symbol a3 is an output of 104b, b3 is an output of 104a, and c3 is an output of 104c. The rotational directions can be discerned based on this difference. FIG. 65A illustrates theoretical variations in light quantity, wherein the contrast of the Fourier image is extremely high enough to approximate to an ideal level. As a matter of fact, however, the contrast of the Fourier image is rather low. Hence, each light quantity, as shown in FIG. 65B, changes in a substantially sine wave-like configuration. Based on these signals, there are obtained the rotational information such as a rotation angle and a rotation quantity, or a rotating speed and a rotating acceleration.

The following is a description of a method of detecting the reference position defined as an origin by use of the beam branched off in the direction T by the half-mirror 240 in conjunction with FIG. 62. FIG. 62 is a view fully depicting a detection optical system for detecting the reference position. FIG. 62 is the view taken substantially along the line A'-A' of FIG. 61.

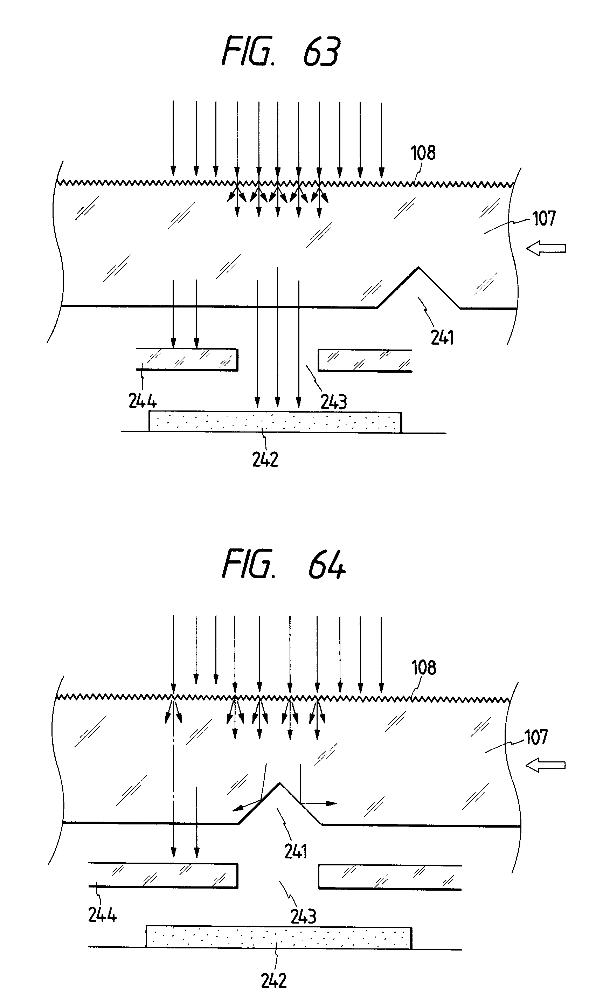

Defined as a light diffusing surface is a surface 108 of the scale bottom portion 107. A marker element 241 for generating the reference position signal is provided in one position on the periphery of a rear surface of the light diffusing surface 108. The marker element 241 consists of a V-groove portion constituted by surfaces each inclined at 45 degrees. The V-groove portion is elongated in a direction orthogonal (perpendicular to the sheet surface) to the peripheral direction of the scale. An optical detection unit is fixedly placed downwardly of the V-groove portion. This detection unit includes a fixing slit 244, an opening 243 of the fixing slit, a photodetector 245 for obtaining the reference position signal and a light receiving surface 242 of the photodetector. Note that the surface is formed as a light diffusing surface because of obviating an adverse influence of the Fourier image on the detection of the reference position. The surface on which the marker element 241 is formed deviates from the Fourier image forming position so as not to undergo the influence of the Fourier image. With this arrangement, the foregoing surface is not necessarily formed as the light diffusing surface. FIGS. 63 and 64 are diagrams of assistance in explaining the action to detect the reference position signal on the basis of the construction given above. FIG. 63 illustrates a state where the V-groove portion 241 deviates in position from the opening 243 of the fixing slit 244. In this state, the beams diffused by the diffusing surface 108 pass through the opening 243 and are incident on the light receiving surface 242 of the photodetector. Contrastingly, FIG. 64 illustrates a state where the scale further rotates from the state of FIG. 63, and the V-groove portion 241 coincides in position with the opening 243 of the fixing slit 244. At this time, the diffused beams incident on the V-groove portion 241 are fully reflected by the oblique surfaces of the V-groove. The beams incident on the light receiving surface 242 are reduced or not incident at all.

FIG. 66A shows a situation where an amount of beams incident on the light receiving surface 242 changes depending on the rotary motion of the slit. Normally, an output having a predetermined intensity is obtained. During a short period for which the reference split passes, however, an amount of beams received by the light receiving surface 242 is reduced. FIG. 66B shows reference position signals created based on that signal. The absolute reference position signal is thus obtained at predetermined one point in one revolution through 360 degrees. It is to be noted that a plurality of slits 241 are formed along the periphery, a plurality of reference position signals can be acquired by one revolution, correspondingly.

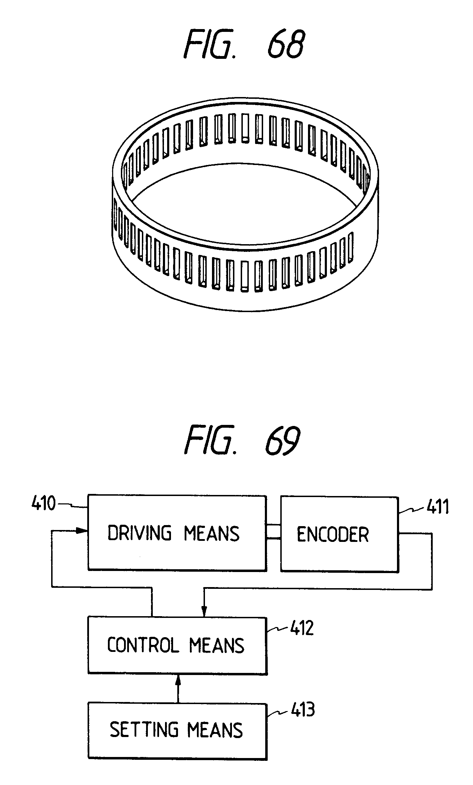

Incidentally, the thirteenth embodiment described above has dealt with an example of using the scale in which the grating unit is formed by providing rugged portions having the oblique surfaces on the transmissive scale. The present invention is not limited to this encoder but is similarly applicable to an encoder shown in the first embodiment, wherein the cylindrical scale formed with the slit-like gratings illustrated in FIG. 68 is employed.

The light source usable in this embodiment is not limited to the semiconductor laser as in other embodiment discussed above but may be, e.g., a point light source LED. The costs can be further reduced by using the LED which is more inexpensive than the semiconductor laser.

FIG. 69 is a system block diagram of a driving system including the rotary encoder, showing one example of a system using the encoder described in the thirteenth embodiment. A driving means 410 has driving sources such as a motor, an actuator and an internal combustion engine. The encoder 411 explained above is connected to a rotation output unit of the driving means 410, thereby detecting driving conditions such as a rotation angle, a rotation quantity and a rotating speed. A detection output of this encoder is fed back to a control means 412. In the control means 412, a driving signal is transmitted to the driving means 410 to develop a condition set by a setting means 413. This type of feedback system is thus configured, whereby the rotational status set by the setting means can be obtained. This driving system is applicable to a variety of machine tools or manufacturing machines, measuring instruments, robots, cameras, video acoustic devices and information devices. The driving system is not limited to these devices but is applicable more widely to the whole devices incorporating the driving means.

The rotation detecting instrument in this embodiment exhibits the following effects. The device can be miniaturized, and the inertia can also be reduced. The assembly is facilitated. In addition, the applicability is expanded because of obtaining the reference position signal of rotation.

Although the illustrative embodiments have been described in detail with reference to the accompanying drawings, it is to be understood that the present invention is not limited to those embodiment. Various changed or modifications may be effected therein by one skilled in the art without departing from the scope or spirit of the invention.

An encoder includes a scale member provided on one body of two bodies which are relatively rotated and having gratings arranged in a relative rotating direction and a light irradiation means for irradiating a first region with beams. A diffracted image of the first regions is projected on a second region of the scale member. The encoder further includes a means for detecting the beams from the second region. The relative rotation of the other body is detected based on a detected result thereof. Disclosed is a scale whose relative rotation to the rotation detecting device is detected by its being irradiated with the beams from this device. The scale includes a base member formed with the grating having surfaces inclined to incident beams. Disclosed is a driving system for causing relative rotations of the two bodies. This system includes a means for relatively rotationally driving the two bodies and a control means for controlling a driving condition of the driving means. Disclosed is a motor unit including a motor module having its body whose rotation is detected by a result of a light irradiation means and rotary shaft provided with a scale member. This unit further includes a means for integrally supporting the body, the light irradiation means and the detecting means.

## Claims

1. A rotation detecting apparatus for detecting relative rotation of two bodies, comprising:

    a scale member (3; 43; 63; 63'; 63''; 83; 103) provided on said one body and formed with gratings (30a, 30b; 70a, 70b) arranged in a direction of a relative rotation to extend in a direction of a rotary axis (5; 65) of the relative rotation;

    a light irradiation means (1, 2; 41, 42; 61, 62; 81, 82; 101, 102) for irradiating a first region (31; 51; 71; 71'; 91; 131) formed with said gratings of said scale member (3; 43; 63; 63'; 63''; 83; 103) with beams, a diffracted image of said first region (31; 51; 71; 71'; 91; 131) irradiated with the beams from said light irradiation means (1, 2; 41, 42; 61, 62; 81, 82; 101, 102) being projected on a second region (32; 52; 72; 72'; 92; 132) formed with said gratings of said scale member (3; 43; 63; 63'; 63''; 83; 103); and

    a detecting means (4; 44a, 44b, 44c; 64; 64a, 64b; 40a, 40b; 104a, 104b, 104c) for detecting the beams from said second region (32; 52; 72; 72'; 92; 132) on which said diffracted image is projected, the relative rotation of said scale member (3; 43; 63; 63'; 63''; 83; 103) with respect to said other body being detected on the basis of a detected result of said detecting means (4; 44a, 44b, 44c; 64; 64a, 64b; 40a, 40b; 104a, 104b, 104c);

    **characterized in that**

    said diffracted image of the first region (31; 51; 71; 71'; 91; 131) projected on the second region (32; 52; 72; 72'; 92; 132) comprises three Fourier images, one of said Fourier images being generated by making a 0th order diffraction beam and a +1st order diffraction beam mutually interfere, another one of said Fourier images being generated by making the 0th order diffraction beam and a -1st order diffraction beam mutually interfere, and the third one of said Fourier images being generated by making the 0th order diffraction beam and the ±1st order diffraction beams mutually interfere, wherein said beams are emerged from said first region (31; 51; 71; 71'; 91; 131).

2. An apparatus according to claim 1, wherein said scale member (3; 43; 63; 63'; 63''; 83; 103) is a cylindrical body and makes relative rotations about a rotary axis (5; 65) parallel to the generatrix of said cylinder body, and the gratings are formed in the direction of the relative rotation of said scale member on a cylindrical side surface thereof.

3. An apparatus according to claim 1, wherein the gratings are so formed that transmitting portions (30a; 70a) and shading portions (30b; 70b) are alternately arranged in the direction of the relative rotation of said scale member.

4. An apparatus according to Claim 3, wherein said scale member (3) assumes a cylindrical shape, said light irradiation means (1,2) effects irradiation from outside of said scale member, said diffracted image is formed by the beams penetrating said first region (31), and said detecting means (4) receives the beams penetrating said second regions (32).

5. An apparatus according to claim 1, wherein the gratings are so formed that rugged portions having surfaces inclined to incident beams are arranged in the direction of the relative rotation of said scale member (43; 63'; 83).

6. An apparatus according to claim 5, wherein said scale member (43; 83) assumes said cylindrical shape, at least portions formed with the gratings have a transmissive property, said light irradiation means (41, 42; 81, 82) effect irradiation from outside of said scale member, said diffracted image is formed by the beams penetrating said first region (51; 91), and said detecting means (44a, 44b, 44c; 40a, 40b) receives the beams penetrating said second region (52; 92).

7. An apparatus according to claim 5, wherein said detecting means (44a, 44b, 44c; 64a, 64b; 40a, 40b) has at least two light receiving elements for obtaining periodic signals exhibiting different phases.

8. An apparatus according to claim 7, wherein at least said two light receiving elements (44a, 44b, 44c; 64a, 64b; 40a, 40b) obtain the periodic signals exhibiting the different phases by receiving the beams emitted in different directions from said second region (52; 92; 72').

9. An apparatus according to claim 7, further comprising a means (46; 86) for discerning the direction of the relative rotation of said scale member (43; 63'; 83) on the basis of the periodic signals exhibiting the different phases and/or a means for effecting a signal interpolating process on the basis of the periodic signals exhibiting the difference phases.

10. An apparatus according to claim 7, wherein said scale member (43; 83) is composed of a transparent body, and the gratings are formed by providing sectionally V-shaped grooves on said transparent body.

11. An apparatus according to claim 1, wherein said scale member (63; 63') is a hollow body, said light irradiation means (61) effects the irradiation from inside of said hollow body, said diffracted image is formed by the beams reflected by said first region (71; 71'), and detecting means (64; 64a, 64b) receives the beams reflected by said second region (72; 72').

12. An apparatus according to claim 11, wherein the gratings include V-shaped grooves or protrusions periodically arranged on an inner periphery of said hollow body (72').

13. An apparatus according to Claim 11, wherein said light irradiation means (61) includes a reflection member (66') for directing the beams to said first region (71; 71').

14. An apparatus according to claim 11, wherein said detecting means (64) includes a reflection member (67') for directing the beams emerging from said second region (72) to light receiving element of said detecting means (64).

15. An apparatus according to claim 1, wherein at least a portion (200) having a refractive index larger than air intervenes in a light path between said first region (91) and said second region (92).

16. An apparatus accoridng to claim 15, wherein said scale member (83) assumes a cylindrical shape, the gratings are formed on a cylindrical side surface, and a member (200) having a refractive index larger than the air intervenes in the light path inwardly of said cylindrical scale member.

17. An apparatus according to claim 1, wherein said scale member (43) includes a fitting portion fitted to a body the relative rotation of which is to be detected.

18. An apparatus according to claim 1, wherein a diameter d of said scale member (3; 43; 63; 63'; 63''; 83; 103) satisfies the following formula:

$$(N- (1/4)) \; P^2 \, /\lambda < d < (N + (1/4)) \; P_2 \, /\lambda$$

where P is the pitch of the gratings, $\lambda$ is the wavelength of the beams emerging from said light irradiation means (1, 2; 41, 42; 61, 62; 81, 82; 101, 102), and N is a natural number.

19. An apparatus according to claim 18, said pitch P satisfies the following formula:

$$P = \pi d/n$$

where n is the total number of said transmitting portions of the gratings.

20. An apparatus according to claim 1, further comprising a marker element (241), provided at a part of said scale member (103), for detecting a reference position.

21. An apparatus according to claim 20, further comprising a marker element irradiation means (101, 102, 240) for irradiating said marker element (241) with the beam, and a reference position detecting means (245) for detecting that said scale member (103) is in a relative rotational position serving as the reference by detecting the beam emitted from said marker irradiation means (101, 102, 240).

22. An apparatus according to claim 21, wherein said marker irradiation means (101, 102, 240) includes a branching means (240) for branching the beams from said light irradiation means (101, 102) and directing the branched beam to said marker element (241).

25

23. A scale irradiated with beams by a light irradiation means (41, 42; 61, 62; 81, 82; 101, 102) of a rotation detecting apparatus, a relative rotation of said scale with respect to a detecting means (44a, 44b, 44c; 64, 64a, 64b; 40a, 40b; 104a, 104b, 104c) of said rotation detecting apparatus being detected on the basis of an emitted-beam detected result by said detecting means, comprising:

a base member (43; 63; 63'; 63''; 83; 103) fitted to a body whose relative rotation on the detecting means is detected; and

gratings arranged on said base member in the direction of the relative rotation to exted in a direction of a rotary axis of the relative rotation, wherein a first region (51; 71'; 91; 131) formed with the gratings is irradiated with the beams, a diffracted image of the first region is projected on a second region (52; 72'; 92; 132) formed with said gratings, and the relative rotation of said scale is detected on the basis of a detected result of the beams from said second region;

characterized in that

said gratings are formed by arranging rugged portions having surfaces inclined to incident beams in the direction of the relative rotation of said base member (43; 63; 63': 63''; 83; 102), and in that said diffracted image of the first region (51; 72'; 92; 132) comprises three Fourier images, one of said Fourier images being generated by making a 0th order diffraction beam and a +1st order diffraction beam mutually interfere, another one of said Fourier images being generated by making the 0th order diffraction beam and a -1st order diffraction beam mutually interfere, and the third one of said Fourier images being generated by making the 0th order diffraction beam and the ±1st order diffraction beams mutually interfere, wherein said beams emerge from said first region.

24. A scale according to claim 23, wherein gratings are so formed that sectionally V-shaped grooves are arranged in a plurality of lines in the direction of the relative rotation of said base member (43; 63'; 63''; 83; 103).

25. A scale according to claim 24, wherein said plurality of grooves are so arranged that virtually non-oblique portions to the incident beams are interposed therebetween.

26. A scale according to claim 25, wherein each width of the groove and said non-oblique portion is P/2, where P is the pitch at which the grooves are arranged.

27. A scale according to claim 25, wherein the width of the groove is 2P/3, while the width of the non-oblique portion is P/3, where P is the pitch at which the grooves are arranged.

28. A driving system for causing two bodies to make relative rotations, comprising: a rotation detecting apparatus according to claim 1

a driving means (114; 300; 300'; 410) for relatively rotationally driving said two bodies; and

a control means (112; 121; 121'; 412) for controlling a driving condition of said driving means on the basis of a detected result by said detecting means.

29. A driving system according to claim 28, further comprising setting means (113; 122; 122'; 413) for setting a driving condition developed by said control means (112; 121; 121'; 412) performing the control on the basis of the detected result by said detecting means.

30. A driving system according to claim 29, wherein the gratings are formed by providing sectionally V-shaped grooves on said scale member (43; 63'; 63''; 83; 103).

31. A driving system according to claim 30, wherein said detecting means includes a plurality of light receiving elements (40a, 40b; 44a, 44b, 44c; 104a, 104c, 104b), for receiving the beams emitted from said second region (52; 92; 132) in different directions, from which periodic signals exhibiting different phases are obtained.

**Patentansprüche**

1. Rotationserfassungsgerät zur Erfassung der relativen Verdrehung zweier Körper, mit

einer Skala (3; 43; 63; 63'; 63''; 83; 103), die an dem einen Körper vorgesehen ist und Beugungsgitter (30a, 30b; 70a, 70b) umfaßt, die in einer Richtung einer relativen Verdrehung angeord-

EP 0 439 804 B1

net sind, um sich in einer Richtung einer Drehachse (5; 65) der relativen Verdrehung zu erstrecken;

einer Lichtbestrahlungseinrichtung (1, 2; 41, 42; 61, 62; 81, 82; 101, 102) zur Bestrahlung eines ersten Bereichs (31; 51; 71; 71'; 91; 131) mit Lichtstrahlen, der durch die Beugungsgitter (30a, 30b; 70a, 70b) der Skala (3; 43; 63; 63'; 63''; 83; 103) gebildet ist, wobei eine gebeugte Abbildung des ersten Bereichs (31; 51; 71; 71'; 91; 131), der mit den Lichtstrahlen von der Lichtbestrahlungseinrichtung (1, 2; 41, 42; 61, 62; 81, 82; 101, 102) bestrahlt wird auf einen zweiten Bereich (32; 52; 72; 72'; 92; 132) projiziert wird, der durch die Beugungsgitter (30a, 30b; 70a, 70b) der Skala (3; 43; 63; 63'; 63''; 83; 103) gebildet ist; und

einer Erfassungseinrichtung (4; 44a, 44b, 44c; 64; 64a, 64b; 40a, 40b; 104a, 104b, 104c) zur Erfassung der Lichtstrahlen von dem zweiten Bereich (32; 52; 72; 72'; 92; 132), auf den die gebeugte Abbildung projiziert wird, wobei die relative Verdrehung der Skala (3; 43; 63; 63'; 63''; 83; 103) mit Bezug zum anderen Körper auf der Basis eines erfassten Ergebnisses der Erfassungseinrichtung (4; 44a, 44b, 44c; 64; 64a, 64b; 40a, 40b; 104a, 104b, 104c) ermittelt wird,

*dadurch gekennzeichnet, daß*

die gebeugte Abbildung des ersten Bereichs (31; 51; 71; 71'; 91; 131), die auf den zweiten Bereich projiziert wird, drei Fourier-Abbildungen umfaßt, wobei eine dieser Fourier-Abbildungen erzeugt wird, indem ein Beugungs-Lichtstrahl 0.ter Ordnung und ein Beugungs-Lichtstrahl + 1.ter Ordnung sich gegenseitig überlagern, eine andere dieser Fourier-Abbildungen erzeugt wird, indem ein Beugungs-Lichtstrahl 0.ter Ordnung und ein Beugungs-Lichtstrahl -1.ter Ordnung sich gegenseitig überlagern, und die dritte dieser Fourier-Abbildungen erzeugt wird, indem ein Beugungs-Lichtstrahl 0.ter Ordnung und ein Beugungs-Lichtstrahl ±1.ter Ordnung sich gegenseitig überlagern, wobei diese Lichtstrahlen von dem ersten Bereich (31; 51; 71; 71'; 91; 131) ausgesandt werden.

2. Gerät nach Anspruch 1, wobei die Skala (3; 43; 63; 63'; 63''; 83; 103) ein zylindrischer Körper ist und eine relative Verdrehung um eine Drehachse (5; 65) ausführt, die parallel zur Erzeugenden des zylindrischen Körpers ist, und die Beugungsgitter in der Richtung der relativen Verdrehung der Skala auf einer zylindrischen Seitenfläche darauf ausgebildet sind.

3. Gerät nach Anspruch 1, wobei die Beugungsgitter so ausgebildet sind, daß Übertragungsabschnitte (30a; 70a) und Andeckabschnitte (30b; 70b) abwechselnd in der Richtung der relativen Verdrehung der Skala angeordnet sind.

4. Gerät nach Anspruch 3, wobei die Skala (3) eine zylindrische Form einnimmt, die Lichtbestrahlungseinrichtung (1, 2) die Bestrahlung von der Außenseite der Skale bewirkt, die gebeugte Abbildung durch die Lichtstrahlen ausgebildet wird, die den ersten Bereich (31) durchdringen, und die Erfassungseinrichtung (4) die Lichtstrahlen empfängt, die den zweiten Bereich (32) durchdringen.

5. Gerät nach Anspruch 1, wobei die Beugungsgitter so ausgebildet sind, daß zerfurchte Abschnitte mit gegen die einfallenden Lichtstrahlen geneigten Oberflächen in der Richtung der relativen Verdrehung der Skala (43; 63'; 83) angeordnet sind.

6. Gerät nach Anspruch 5, wobei die Skala (43; 83) die zylindrische Form einnimmt, zumindest Abschnitte ausgebildet sind, die an den Beugungsgittern eine durchlassende Eigenschaft haben, die Lichtbestrahlungseinrichtung (41, 42; 81, 82) die Bestrahlung von der Außenseite der Skala bewirkt, die gebeugte Abbildung durch die Lichtstrahlen erzeugt wird, die den ersten Bereich (51; 91) durchdringen, und die Erfassungseinrichtung (44a, 44b, 44c; 40a, 40b) die Lichtstrahlen empfängt, die durch den zweiten Bereich (52; 92) treten.

7. Gerät nach Anspruch 5, wobei die Erfassungseinrichtung (44a, 44b, 44c; 40a, 40b) zumindest zwei Lichtempfangselemente umfaßt, um periodische Signale zu erhalten, die unterschiedliche Phasen aufweisen.

8. Gerät nach Anspruch 7, wobei zumindest die zwei Lichtempfangselemente (44a, 44b, 44c; 64a, 64b; 40a, 40b) die periodischen Signale, die die unterschiedlichen Phasen aufweisen, erhalten, indem sie die Lichtstrahlen empfangen, die von dem zweiten Bereich (52; 92; 72') in unterschiedliche Richtungen ausgesandt werden.

27

9. Gerät nach Anspruch 7, weiterhin mit einer Einrichtung (46; 86) zur Erkennung der Richtung der relativen Verdrehung der Skala (43; 63'; 83) auf der Basis der periodischen Signale, die die unterschiedlichen Phasen zeigen und/oder einer Einrichtung zur Bewirkung eines Signalinterpolationsverfahrens auf der Basis der periodischen Signale, die die unterschiedlichen Phasen zeigen.

10. Gerät nach Anspruch 7, wobei die Skala (43; 83) aus einem transparenten Körper besteht, und die Beugungsgitter durch das Vorsehen von im Querschnitt V-förmigen Nuten an dem transparenten Körper ausgebildet sind.

11. Gerät nach Anspruch 1, wobei die Skala (63; 63') ein hohler Körper ist, die Lichtbestrahlungseinrichtung (61) die Bestrahlung von der Innenseite des hohlen Körpers aus bewirkt, die gebeugte Abbildung durch die Lichtstrahlen erzeugt wird, die von dem ersten Bereich (71; 71') reflektiert werden, und eine Erfassungseinrichtung (64; 64a, 64b) die Lichtstrahlen empfängt, die von dem Zweiten Bereich (72; 72') reflektiert werden.

12. Gerät nach Anspruch 11, wobei die Beugungsgitter V-förmige Nuten oder Erhebungen umfassen, die periodisch an einer Innenseite des hohlen Körpers (72') angeordnet sind.

13. Gerät nach Anspruch 11, wobei die Lichtbestrahlungseinrichtung (61) einen Reflektor (66') umfaßt, der die Lichtstrahlen zu dem ersten Bereich (71; 71') leitet.

14. Gerät nach Anspruch 11, wobei die Erfassungseinrichtung (64) einen Reflektor (67') umfaßt, der die von dem zweiten Bereich (72) ausgesandten Lichtstrahlen zu dem Lichtempfangselement der Erfassungseinrichtung (64) leitet.

15. Gerät nach Anspruch 1, wobei zumindest ein Abschnitt mit einer Brechzahl größer als die von Luft in einem Lichtweg zwischen dem ersten Bereich (91) und dem zweiten Bereich (92) vorgesehen ist.

16. Gerät nach Anspruch 15, wobei die Skala (83) eine zylindrische Form einnimmt, die Beugungsgitter auf einer zylindrischen Seitenfläche ausgebildet sind, und ein Bauteil (200) mit einer Brechzahl größer als die von Luft im Lichtweg innerhalb der zylindrischen Skala vorgesehen ist.

17. Gerät nach Anspruch 1, wobei die Skala (43) einen Paßabschnitt umfaßt, der an einem Körper befestigt ist, dessen relative Verdrehung erfaßt werden soll.

18. Gerät nach Anspruch 1, wobei ein Durchmesser der Skala (3; 43; 63; 63'; 63''; 83; 103) die folgende Formel erfüllt:

$$(N - (1/4))P^2 / \lambda < d < (N + (1/4))P^2 / \lambda$$

wobei P die Teilung der Beugungsgitter ist, $\lambda$ die Wellenlänge der Lichtstrahlen ist, die von der Lichtbestrahlungseinrichtung (1, 2; 41, 42; 61, 62; 81, 82; 101, 102) ausgesandt werden, und N eine natürliche Zahl ist.

19. Gerät nach Anspruch 18, wobei die Teilung P die folgende Formel erfüllt:

$$P = \pi \, d / n$$

wobei n die gesamte Anzahl der übertragenden Abschnitte der Beugungsgitter ist.

20. Gerät nach Anspruch 1, weiterhin mit einer Markierung (241), die an einem Teil der Skala (103) vorgesehen ist, um eine Referenzposition zu erfassen.

21. Gerät nach Anspruch 20, weiterhin mit einer Markierungs-Bestrahlungseinrichtung (101, 102, 240) zur Bestrahlung der Markierung (241) mit einem Lichtstrahl, und einer Referenzpositions-Erfassungseinrichtung (245) zur Erfassung, daß die Skala (103) in einer relativen Verdrehlage ist, die als Referenz dient, indem der Lichtstrahl erfaßt wird, der von der Markierungs-Bestrahlungseinrichtung (101, 102, 240) ausgesandt wird.

**22.** Gerät nach Anspruch 21, wobei die Markierungs-Bestrahlungseinrichtung (101, 102, 240) eine Verzweigungseinrichtung (240) umfaßt, die die Lichtstrahlen von der Lichtbestrahlungseinrichtung (101, 102) verzweigt und die verzweigten Lichtstrahlen zu der Markierung (241) leitet.

**23.** Skala, die mit Lichtstrahlen mittels einer Lichtbestrahlungseinrichtung (41, 42; 61, 62; 81, 82; 101, 102) eines Rotationserfassungsgeräts bestrahlt wird, wobei eine relative Verdrehung der Skala mit Bezug zu einer Erfassungseinrichtung (44a, 44b, 44c; 64, 64a, 64b; 40a, 40b; 104a, 104b, 104c) des Rotationserfassungsgeräts auf der Basis eines erfaßten Ergebnisses eines ausgesandten Lichtstrahls ermittelt wird, mit:

einer Basis (43; 63; 63'; 63''; 83; 103), die an einem Körper befestigt ist, dessen relative Verdrehung zu der Erfassungseinrichtung ermittelt wird; und

Beugungsgittern, die an der Basis in der Richtung der relativen Verdrehung angeordnet sind, um sich in eine Richtung einer Drehachse der relativen Verdrehung zu erstrecken, wobei ein erster Bereich (51; 71'; 91; 131), der an den Beugungsgittern ausgebildet ist, mit Lichtstrahlen bestrahlt wird, eine gebeugte Abbildung des ersten Bereichs auf einen zweiten Bereich (52; 72'; 92; 132) projiziert wird, der an den Beugungsgittern ausgebildet ist, und die relative Verdrehung der Skala auf der Basis eines ermittelten Ergebnisses der Lichtstrahlen von dem zweiten Bereich erfaßt wird,

*dadurch gekennzeichnet, daß*

die Beugungsgitter ausgebildet sind, indem zerfurchte Abschnitte mit Oberflächen, die zu den einfallenden Lichtstrahlen geneigt sind, in der Richtung der relativen Verdrehung der Basis (43; 63; 63'; 63''; 83; 103) angeordnet sind, und daß die gebeugte Abbildung des ersten Bereiches (51; 72'; 92; 132) drei Fourier-Abbildungen umfaßt, wobei eine dieser Fourier-Abbildungen erzeugt wird, indem ein Beugungs-Lichtstrahl 0.ter Ordnung und ein Beugungs-Lichtstrahl +1.ter Ordnung sich gegenseitig überlagern, eine andere dieser Fourier-Abbildungen erzeugt wird, indem ein Beugungs-Lichtstrahl 0.ter Ordnung und ein Beugungs-Lichtstrahl -1.ter Ordnung sich gegenseitig überlagern, und die dritte dieser Fourier-Abbildungen erzeugt wird, indem ein Beugungs-Lichtstrahl 0.ter Ordnung und ein Beugungs-Lichtstrahl ±1.ter Ordnung sich gegenseitig überlagern, wobei die Lichtstrahlen von dem ersten Bereich ausgesandt werden.

**24.** Skala nach Anspruch 23, wobei die Beugungsgitter so ausgebildet sind, daß im Querschnitt V-förmige Nuten in einer Vielzahl von Linien in der Richtung der relativen Verdrehung der Basis (43; 63'; 63''; 83; 103) angeordnet sind.

**25.** Skala nach Anspruch 24, wobei die Vielzahl der Nuten so angeordnet ist, daß virtuelle nicht-schräge Abschnitte zu den einfallenden Lichtstrahlen dazwischen angeordnet sind.

**26.** Skala nach Anspruch 25, wobei die Weite jeder Nut und des nicht-schrägen Abschnittes P/2 ist, wobei P die Teilung ist, in der die Nuten angeordnet sind.

**27.** Skala nach Anspruch 25, wobei die Weite der Nut 2P/3 ist, während die Weite des nicht-schrägen Abschnittes P/3 ist, wobei P die Teilung ist, in der die Nuten angeordnet sind.

**28.** Antriebssystem zur Verursachung der relativen Verdrehung zweier Körper, mit einem Rotationserfassungsgerät nach Anspruch 1, einer Antriebseinrichtung (114; 300; 300'; 410) zur relativen Verdrehung der zwei Körper, und einer Steuerung (112; 121; 121'; 412) zur Steuerung eines Antriebsbetriebs der Antriebseinrichtung auf der Basis eines ermittelten Ergebnisses durch die Erfassungseinrichtung.

**29.** Antriebssystem nach Anspruch 28, weiterhin mit einer Einstelleinrichtung (113; 122; 122'; 413) zur Einstellung eines Antriebsbetriebes, verursacht durch die Steuerung (112; 121; 121'; 412), die die Steuerung auf der Basis des ermittelten Ergebnisses durch die Erfassungseinrichtung durchführt.

**30.** Antriebssystem nach Anspruch 29, wobei die Beugungsgitter durch Vorsehen von im Querschnitt V-förmigen Nuten an der Skala (43; 63'; 63''; 83; 103) ausgebildet sind.

**31.** Antriebssystem nach Anspruch 30, wobei die Erfassungseinrichtung eine Vielzahl von Lichtempfangselementen (40a, 40b; 44a, 44b, 44c; 104a, 104b, 104c) umfaßt, die die Lichtstrahlen empfangen, die von dem zweiten Bereich (52; 92; 132) in unterschiedliche Richtungen ausgesandt werden, aus denen die periodischen Signale erhalten werden, die die unterschiedlichen Phasen aufweisen.

29

**Revendications**

1.  Appareil de détection de rotation pour détecter la rotation relative de deux corps, comprenant:

    une échelle (3; 43; 63; 63'; 63''; 83; 103) disposée sur ledit corps et sur laquelle sont formés des réseaux (30a, 30b; 70a, 70b) disposés dans la direction d'une rotation relative de façon à s'étendre dans la direction d'un axe de rotation (5; 65) de la rotation relative;

    un moyen (1, 2; 41, 42; 61, 62; 81, 82; 101, 102) d'exposition à la lumière pour exposer une première région (31; 51; 71; 71'; 91; 131), sur laquelle sont formés lesdits réseaux de ladite échelle (3; 43; 63; 63'; 63''; 83; 103), à des faisceaux, une image diffractée de ladite première région (31; 51; 71; 71'; 91; 131) exposée aux faisceaux provenant du moyen (1, 2; 41, 42; 61, 62; 81, 82; 101, 102) d'exposition à la lumière étant projetée sur une seconde région (32; 52; 72; 72'; 92; 132) sur laquelle sont formés lesdits réseaux de ladite échelle (3; 43; 63; 63'; 63''; 83; 103); et

    un moyen (4; 44a, 44b, 44c; 64; 64a, 64b; 40a, 40b; 104a, 104b, 104c) de détection pour détecter les faisceaux provenant de ladite seconde région (32; 52; 72; 72'; 92; 132) sur laquelle est projetée ladite image diffractée, la rotation relative de ladite échelle (3; 43; 63; 63'; 63''; 83; 103) par rapport audit autre corps étant détectée à partir d'un résultat de détection dudit moyen de détection (4; 44a, 44b, 44c; 64; 64a, 64b; 40a, 40b; 104a, 104b, 104c) ;

    caractérisé en ce que

    ladite image diffractée de la première région (31; 51; 71; 71'; 91; 131) projetée sur la seconde région (32; 52; 72; 72'; 92; 132) comprend trois images de Fourier, l'une desdites images de Fourier étant générée en faisant interférer mutuellement un faisceau de diffraction d'ordre 0 et un faisceau de diffraction d'ordre +1, une autre desdites images de Fourier étant générée en faisant interférer mutuellement le faisceau de diffraction d'ordre 0 et un faisceau de diffraction d'ordre -1, et la troisième desdites images de Fourier étant générée en faisant interférer mutuellement le faisceau de diffraction d'ordre 0 et les faisceaux de diffraction d'ordres ±1, lesdits faisceaux émanant de ladite première région (31; 51; 71; 71'; 91; 131).

2.  Appareil selon la revendication 1, dans lequel ladite échelle (3; 43; 63; 63'; 63''; 83; 103) est un corps cylindrique et effectue des rotations relatives autour d'un axe (5; 65) de rotation parallèle à la génératrice dudit corps cylindrique, et les réseaux sont formés dans la direction de la rotation relative de ladite échelle sur une surface latérale cylindrique de cette dernière.

3.  Appareil selon la revendication 1, dans lequel les réseaux sont formés de façon que des parties (30a; 70a) transmissives et des parties (30b; 70b) opaques soient agencées en alternance dans la direction de la rotation relative de ladite échelle.

4.  Appareil selon la revendication 3, dans lequel ladite échelle (3) présente une forme cylindrique, ledit moyen (1, 2) d'exposition à la lumière effectue une exposition de l'extérieur de ladite échelle, ladite image diffractée est formée par les faisceaux pénétrant dans ladite première région (31), et ledit moyen (4) de détection reçoit les faisceaux pénétrant dans ladite seconde région (32).

5.  Appareil selon la revendication 1, dans lequel les réseaux sont formés de telle façon que des parties à aspérités ayant des surfaces inclinées par rapport à des faisceaux incidents soient agencées dans la direction de la rotation relative de ladite échelle (43; 63'; 83).

6.  Appareil selon la revendication 5, dans lequel ladite échelle (43; 83) présente ladite forme cylindrique, au moins certaines parties dans lesquelles sont formés les réseaux ont une propriété de transmission, lesdits moyens (41, 42; 81, 82) d'exposition à la lumière effectuent une exposition de l'extérieur de ladite échelle, ladite image diffractée est formée par les faisceaux pénétrant dans ladite première région (51; 91) et ledit moyen (44a, 44b, 44c; 40a, 40b) de détection reçoit le faisceau pénétrant dans ladite seconde région (52; 92).

7.  Appareil selon la revendication 5, dans lequel ledit moyen (44a, 44b, 44c; 64a, 64b; 40a, 40b) de détection a au moins deux éléments récepteurs de lumière pour obtenir des signaux périodiques présentant des phases différentes.

8.  Appareil selon la revendication 7, dans lequel au moins lesdits deux éléments (44a, 44b, 44c; 64a, 64b; 40a, 40b) récepteurs de lumière obtiennent les signaux périodiques présentant les phases différentes en recevant les faisceaux émis dans des directions différentes de ladite seconde région (52; 92; 72').

9. Appareil selon la revendication 7, comprenant en outre un moyen (46; 86) pour discerner la direction de rotation relative de ladite échelle (43; 63'; 83) à partir des signaux périodiques présentant les phases différentes et/ou un moyen pour effectuer un traitement d'interpolation de signaux à partir des signaux périodiques présentant les différences de phase.

10. Appareil selon la revendication 7, dans lequel ladite échelle (43; 83) est composée d'un corps transparent et les réseaux sont formés par réalisation de stries dont la section droite a la forme d'un V sur ledit corps transparent.

11. Appareil selon la revendication 1, dans lequel ladite échelle (63; 63') est un corps creux, ledit moyen (61) d'exposition à la lumière effectue l'exposition de l'intérieur dudit corps creux, ladite image diffractée est formée par les faisceaux réfléchis par ladite première région (71; 71'), et le moyen (64; 64a, 64b) de détection reçoit les faisceaux réfléchis par ladite seconde région (72; 72').

12. Appareil selon la revendication 11, dans lequel les réseaux comportent des stries ou des protubérances en forme de V agencées périodiquement sur une périphérie intérieure dudit corps (72') creux.

13. Appareil selon la revendication 11, dans lequel ledit moyen (61) d'exposition à la lumière comporte un élément (66') réfléchissant pour diriger les faisceaux vers ladite première région (71; 71').

14. Appareil selon la revendication 11, dans lequel ledit moyen (64) de détection comporte un élément (67') réfléchissant pour diriger les faisceaux émanant de ladite seconde région (72) vers l'élément récepteur de lumière dudit moyen (64) de détection.

15. Appareil selon la revendication 1, dans lequel au moins une partie (200) ayant un indice de réfraction supérieur à celui de l'air intervient dans un trajet lumineux entre ladite première région (91) et ladite seconde région (92).

16. Appareil selon la revendication 15, dans lequel ladite échelle (83) présente une forme cylindrique, les réseaux sont formés sur une surface latérale cylindrique, et un élément (200) ayant un indice de réfraction supérieur à celui de l'air intervient dans le trajet lumineux vers l'intérieur de ladite échelle cylindrique.

17. Appareil selon la revendication 1, dans lequel ladite échelle (43) comporte une partie de montage montée sur un corps dont la rotation relative doit être détectée.

18. Appareil selon la revendication 1, dans lequel le diamètre d de ladite échelle (3; 43; 63; 63'; 63''; 83; 103) répond à la formule suivante:

$$(N - (1/4)P^2/\lambda < d < (N + (1/4))P^2/\lambda$$

où P est le pas des réseaux, $\lambda$ est la longueur d'onde des faisceaux émanant dudit moyen (1, 2; 41, 42; 61, 62; 81, 82; 101, 102) d'exposition à la lumière, et N est un nombre entier naturel.

19. Appareil selon la revendication 18, dans lequel ledit pas P répond à la formule suivante:

$$P = \pi d/n$$

où n est le nombre total desdites parties transmissives des réseaux.

20. Appareil selon la revendication 1, comprenant en outre un élément (241) de marquage réalisé dans une partie de ladite échelle (103), pour détecter une position de référence.

21. Appareil selon la revendication 20, comprenant en outre un moyen (101, 102, 240) d'exposition de l'élément de marquage pour exposer ledit élément (241) de marquage au faisceau, et un moyen (245) de détection de position de référence pour détecter le fait que ladite échelle (103) est à une position de rotation relative servant de référence, par détection du faisceau émis par ledit moyen (101, 102, 240) d'exposition d'éléments de marquage.

22. Appareil selon la revendication 21, dans lequel ledit moyen (101, 102, 240) d'exposition de marqueur comporte un moyen (240) de ramification pour faire se ramifier les faisceaux provenant dudit moyen (101, 102) d'exposition à la lumière et diriger les faisceaux ramifiés vers ledit élément (241) de marquage.

23. Échelle exposée à des faisceaux par un moyen (41, 42; 61, 62; 81, 82; 101, 102) d'exposition à la lumière d'un appareil de détection de rotation, une rotation relative de ladite échelle par rapport à un moyen de détection (44a, 44b, 44c; 64, 64a, 64b; 40a, 40b; 104a, 104b, 104c) dudit appareil de détection de rotation étant détectée à partir d'un résultat de détection de faisceau émis obtenu par ledit moyen de détection, comprenant:
   un élément de base (43; 63; 63'; 63''; 83; 103) monté sur un corps dont la rotation relative sur le moyen de détection est détectée; et
   des réseaux disposés sur ledit élément de base dans la direction de la rotation relative de façon à s'étendre dans la direction d'un axe de rotation de la rotation relative, une première région (51; 71'; 91; 131) dans laquelle sont formés des réseaux, étant exposée aux faisceaux, une image diffractée de la première région étant projetée sur une seconde région (52; 72'; 92; 132) sur laquelle sont formés lesdits réseaux, et la rotation relative de ladite échelle étant détectée à partir d'un résultat de détection des faisceaux provenant de ladite seconde région;
   caractérisée en ce que
   lesdits réseaux sont formés par agencement de parties à aspérités ayant des surfaces inclinées par rapport à des faisceaux incidents dans la direction de rotation relative dudit élément de base (43; 63; 63'; 63''; 83; 102), et en ce que ladite image diffractée de la première région (51; 72'; 92; 132) comprend trois images de Fourier, l'une desdites images de Fourier étant générée en faisant interférer mutuellement un faisceau de diffraction d'ordre 0 et un faisceau de diffraction d'ordre +1, une autre desdites images de Fourier étant générée en faisant interférer mutuellement le faisceau de diffraction d'ordre 0 et un faisceau de diffraction d'ordre -1, et la troisième desdites images de Fourier étant générée en faisant interférer mutuellement le faisceau de diffraction d'ordre 0 et les faisceaux de diffraction d'ordres ±1, lesdits faisceaux émanant de ladite première région.

24. Échelle selon la revendication 23, dans laquelle les réseaux sont formés de telle façon que des stries dont la section droite est en forme de V soient agencées en un ensemble de lignes dans la direction de la rotation relative dudit élément de base (43; 63'; 63''; 83; 103).

25. Échelle selon la revendication 24, dans laquelle ledit ensemble de stries est agencé de telle façon que des parties tout à fait non obliques par rapport aux faisceaux incidentes soient interposées entre elles.

26. Échelle selon la revendication 25, dans laquelle les largeurs de la strie et de ladite partie non oblique sont toutes deux égales à P/2, où P est le pas avec lequel les stries sont agencées.

27. Échelle selon la revendication 25, dans laquelle la largeur de la strie est égale à 2P/3, alors que la largeur de la partie non oblique est égale à P/3, où P est le pas avec lequel les stries sont agencées.

28. Système d'entraînement pour provoquer des rotations relatives de deux corps, comprenant:
   un appareil de détection de rotation selon la revendication 1;
   un moyen (114; 300; 300'; 410) d'entraînement pour entraîner en rotation relative lesdits deux corps; et
   un moyen (112; 121; 121'; 412) de commande pour commander une condition d'entraînement dudit moyen d'entraînement sur la base d'un résultat de détection dudit moyen de détection.

29. Système d'entraînement selon la revendication 28, comprenant en outre un moyen (113; 122; 122'; 413) de réglage pour régler une condition d'entraînement élaborée par ledit moyen (112, 121; 121'; 412) de commande qui exécute la commande sur la base du résultat de détection dudit moyen de détection.

**30.** Système d'entraînement selon la revendication 29, dans lequel les réseaux sont formés par réalisation de stries dont la section droite est en forme de V sur ladite échelle (43; 63'; 63''; 83; 103).

**31.** Système d'entraînement selon la revendication 30, dans lequel ledit moyen de détection comporte un ensemble d'éléments (40a, 40b; 44a, 44b, 44c; 104a, 104c, 104b) récepteurs de lumière pour recevoir les faisceaux émis par ladite seconde région (52; 92; 132) dans des directions différentes, à partir desquelles des signaux périodiques présentant des phases différentes sont obtenus.

# FIG. 1

FIG. 2

FIG. 3

# FIG. 4A

# FIG. 4B

FIG. 5A

N=1    N=2    N=3

51    52

41    42    43    44a    44c    44b    46

FIG. 5B

50b-1
50a
50b-2

FIG. 5C

50a
50b-2
50b-1

EP 0 439 804 B1

FIG. 6

43

FIG. 7

43

1/4P

1/4P

P

1/2P

θ

θ

FIG. 8

FIG. 10

FIG. 9

FIG. 11

FIG. 12

## FIG. 13

100'

50b-2

50b-1

50a

110'

FIG. 14

100

50b-2

50b-1

50a

110

## FIG. 15A

## FIG. 15B

FIG. 16A

ROTATION ANGLE

FIG. 16B

ROTATION ANGLE

## FIG. 17

## FIG. 18A

## FIG. 18B

FIG. 19

# FIG. 20

# FIG. 21A

ROTATION ANGLE

# FIG. 21B

ROTATION ANGLE

# FIG. 22A

ROTATION ANGLE

# FIG. 22B

ROTATION ANGLE

FIG. 23

44a

44c

44b

FIG. 24A    FIG. 24B

EP 0 439 804 B1

FIG. 25A

300
120

FIG. 25B

44
42' 42
41
120
Z

43

Z'
45
300

FIG. 25C

120
300
45

51

# FIG. 26

300' — DRIVING MEANS — ENCODER — 120

CONTROL MEANS — 121

SETTING MEANS — 122

# FIG. 27

*FIG.* *28*

*FIG.* *29*

*FIG.* *30*

EP 0 439 804 B1

FIG. 31A

61
64
67
66
63
63a
114a

x⊗y
z

FIG. 31C

U

63
63a
63c
114a

FIG. 31B

U

63
63b
114a

FIG. 31D

U

63
63d
114a

54

*FIG. 32*

*FIG. 33*

FIG. 34

FIG. 35

FIG. 36

FIG. 37

FIG. 38A

FIG. 38B

FIG. 38C

# FIG. 39A

# FIG. 39B

# FIG. 39C

# FIG. 40A

# FIG. 40B

FIG. 41

140a  141a  142a

64a

C11 → C11'

140c

64c

C21 → C21'

141b  142b

140b

64b

FIG. 42

61

67a'

66'

67c  67b'

x — z
y

63"

# FIG. 43

FIG. 44A

FIG. 44B

FIG. 44C

# FIG. 45

FIG. 46A

FIG. 46B

FIG. 46C

EP 0 439 804 B1

FIG. 47

FIG. 48

FIG. 49

83

FIG. 50

83

1/4P

1/4P

P

1/2P

θ

θ

*FIG. 51*

83

85

*FIG. 53*

83

85

*FIG. 52*

83

85

*FIG. 54*

83

85

# FIG. 55

100

130b-2

130b-1

130a

110

# FIG. 56

100

130b-2

130b-1

130a

110

EP 0 439 804 B1

# FIG. 57A

# FIG. 57B

71

## FIG. 58A

ROTATION ANGLE

## FIG. 58B

ROTATION ANGLE

## FIG. 59

300' — DRIVING MEANS | ENCODER ~120'

CONTROL MEANS ~121'

SETTING MEANS ~122'

FIG. 60A

FIG. 60B

FIG. 60C

EP 0 439 804 B1

FIG. 61

FIG. 62

EP 0 439 804 B1

# FIG. 63

108

107

241

244

243

242

# FIG. 64

108

107

241

244

243

242

## FIG. 65A

## FIG. 65B

EP 0 439 804 B1

FIG. 66A

FIG. 66B

FIG. 67

77

FIG. 68

FIG. 69